# EUROPEAN PATENT SPECIFICATION

(11) **EP 3 567 896 B1**
(45) Date of publication and mention of the grant of the patent: **01.09.2021**
(21) Application number: 18836155.4
(22) Date of filing: 02.07.2018
(51) Int. Cl.: H04W 24/02, H04W 76/11, H04W 76/12

(54) **COMMUNICATION METHOD, DEVICE AND SYSTEM**
KOMMUNIKATIONSVERFAHREN, -VORRICHTUNG UND -SYSTEM
PROCÉDÉ DE COMMUNICATIONS, DISPOSITIF ET SYSTÈME

(30) Priority: 17.07.2017 CN 201710582415
(43) Date of publication of application: 13.11.2019
(73) Proprietor: Huawei Technologies Co., Ltd., Longgang District Shenzhen, Guangdong 518129 (CN)
(72) Inventor: WANG, Rui, Shenzhen, Guangdong 518129 (CN); DAI, Mingzeng, Shenzhen, Guangdong 518129 (CN); ZENG, Qinghai, Shenzhen, Guangdong 518129 (CN); HAN, Lifeng, Shenzhen, Guangdong 518129 (CN)
(74) Representative: Epping - Hermann - Fischer
(86) International application number: PCT/CN2018/093993
(87) International publication number: WO 2019/015472

(56) References cited:
- EP-A1- 3 113 421
- WO-A1-2013/044483
- WO-A1-2015/026315
- WO-A1-2017/045530
- CN-A- 103 533 090
- CN-A- 103 533 536
- US-A1- 2014 064 246
- HUAWEI: "RAN Support for Core Network Slicing", 3GPP DRAFT; R3-161759_SUPPORTFORSLICING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Gothenburg, Sweden; 20160822 - 20160826 21 August 2016 (2016-08-21), XP051141056, Retrieved from the Internet: URL:http://www.3gpp.org/ftp/Meetings_3GPP_ SYNC/RAN3/Docs/ [retrieved on 2016-08-21]
- HUAWEI: "Configuration of RAN Transport network related information", 3GPP DRAFT; S5-171664 PCR TR 28 801 CONFIGURATION OF RAN TRANSPORT NETWORK RELATED INFORMATION, 3RD GENERATION PARTNERSHIP PROJECT (3GPP), MOBILE COMPETENCE CENTRE ; 650, ROUTE DES LUCIOLES ; F-06921 , vol. SA WG5, no. Guilin (China); 20170327 - 20170331 25 March 2017 (2017-03-25), XP051248760, Retrieved from the Internet: URL:http://www.3gpp.org/ftp/Meetings_3GPP_ SYNC/SA5/Docs/ [retrieved on 2017-03-25]

## Description

### TECHNICAL FIELD

The present invention relates to the field of communications technologies, and in particular, to a communication method, a device, and a system.

### BACKGROUND

With evolution of a wireless communications network system and a radio access technology, on the one hand, configurations of the wireless communications network system and services that can be provided by the wireless communications network system are more flexible and diversified, and on the other hand, user requirements for a wireless communications network are increasingly differentiated. Therefore, an important function of a future wireless communications network such as a 5th generation (the fifth generation, 5G) mobile communications system is to provide customized differentiated services for different users by using a network slice. The network slice may be a set that includes a group of network functions, resources, and connection relationships. An operator may create, based on a requirement of each specific business case for key performance indicators such as a capacity, coverage, a rate, a latency, and reliability, a set of specific network functions and network resources required for running these network functions, to provide a required telecommunications service and network capability service for a user, suiting a specific market scenario and requirement.

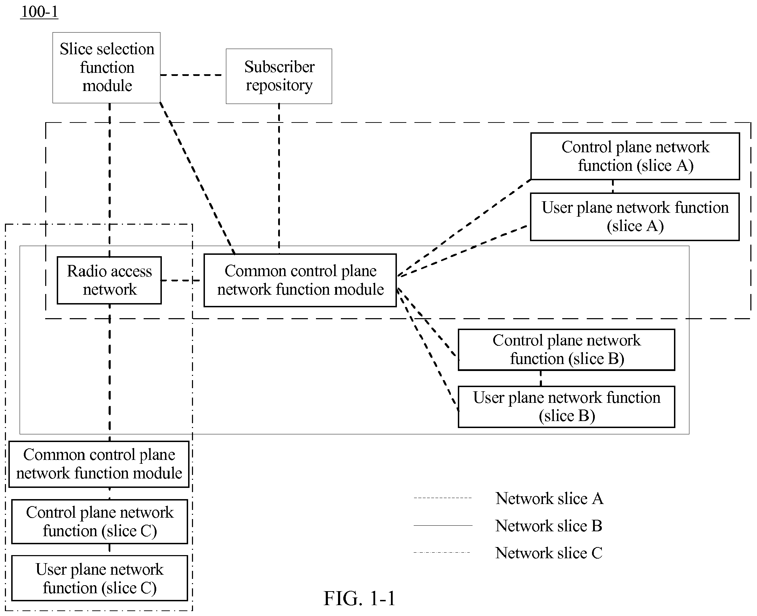

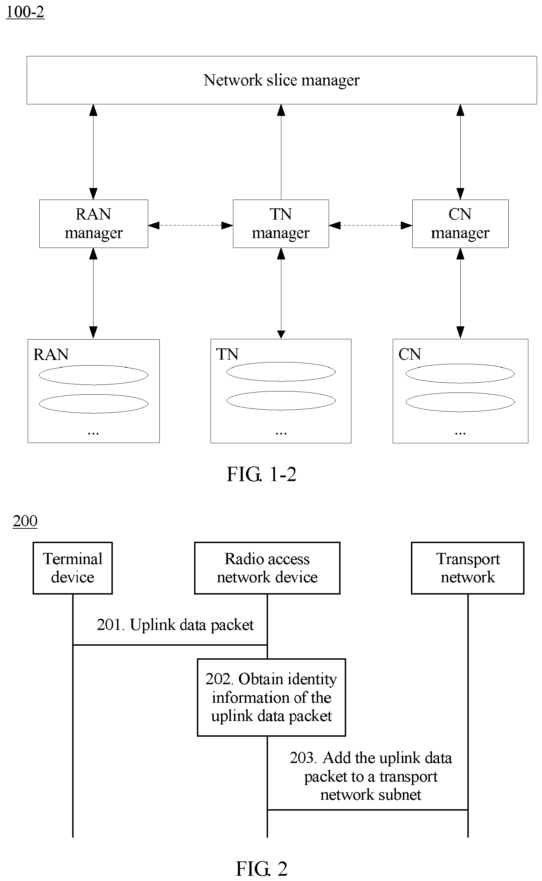

For ease of understanding, as shown in FIG. 1-1, a communications network system 100-1 related to slice communication may include the following parts: a slice selection function (slice selection function, SSF) module, a subscriber repository (subscriber repository), a radio access network (radio access network, RAN), a common control plane network function (common control panel network functions, Common CP NFs) module, a user plane network function (user panel network functions) module, and the like. The modules exchange information with each other through interfaces between the modules. For example, the slice selection function module exchanges information with the radio access network through an interface between the slice selection function module and the radio access network, the subscriber repository may exchange information with the slice selection function module and the common control plane network function module through an interface between the subscriber repository and the slice selection function module and an interface between the subscriber repository and the common control plane network function module respectively, and the radio access network exchanges information with the common control plane network function module through an interface between the radio access network and the common control plane network function module. Various function modules are connected by using dashed lines in FIG. 1-1, to indicate that there may be a communications interface for information exchange between modules having a connection relationship. Details are not described herein. As shown in the example in FIG. 1-1, three network slices are created in the system 100-1: a network slice A, a network slice B, and a network slice C. In the figure, logical division of the slice A, the slice B, and the slice C is identified by using different line boxes. Network function modules required for running each network slice include a radio access network, a common control plane network function module, and a control plane network function and a user plane network function that correspond to the slice. Both the radio access network and the common control plane network function module may be shared by a plurality of network slices.

It should be noted that a network architecture shown in the system 100-1 is only an example, and setting of the function modules in the network architecture is not limited to a relationship in the figure. For example, the SSF module may also be deployed in the common CP NFs module. Each module may further include a function submodule. For example, the common CP NF module may further include at least one of a mobility management function module, an authentication module, a security module, and the like; a CP NF exclusive to a slice may further include a session management module and the like; a UP NF exclusive to a slice may include a user plane function such as a conventional gateway function. A function module may be named differently. Details are not described herein.

Generally, a network slice is an end-to-end service chain, and covered domains (Domain) may include an access network (Radio Access Network, RAN), a core network (Core Network, CN), a transport network (Transport Network, TN), and the like. When a service runs and is transmitted in the foregoing network domains, collaboration is required between networks of the subdomains, to ensure that consistent quality of service is provided. Therefore, for end-to-end network slice parts (for example, a RAN part, a CN part, and a TN part) in different network subdomains, a dedicated network slice management system manages creation, configuration, association, maintenance, collaboration between the parts, and the like. In a network management system 100-2 shown in FIG. 1-2, a network slice management system 100 may include a manager of an end-to-end network slice, which is, for example, referred to as a network manager, and subdomain managers of parts in the end-to-end network slice, for example, a RAN manager, a CN manager, and a TN manager. Each subdomain manager is responsible for overall management in a subdomain of the subdomain manager, and performs corresponding configuration for a node in the subdomain. An interface may be disposed between subdomain managers for message exchange and coordination between subdomains.

However, in a current design of an end-to-end communications network, there is still a case in which system efficiency is low and end-to-end service experience is inconsistent.

Document HUAWEI: "RAN Support for Core Network Slicing", 3GPP DRAFT; R3-161759 describes procedures for associating a UE with a network slice instance in various scenarios.

WO 2015/026315 A1 relates to systems, methods, apparatuses, and computer program products for signaling support that define an open and extensible end-to-end network architecture. One method includes extracting, by an interface to a base station system, real-time and context related information from a radio access network, and transmitting the extracted real-time and context related information to an interface to a transport system.

WO 2017/045530 A1 relates to a communication control method, comprising: receiving, by first user equipment UE, instruction information for setting up a bearer corresponding to a first slice identifier, wherein the instruction information carries an identity of the first UE and an identity of the first function instance; setting up , by the first UE according to the instruction information, the bearer between the first UE and the first function instance, for serving a first service of the first UE, wherein the first function instance corresponds to the first slice identifier; and transmitting, by the first UE, a data packet of the first service by using the bearer, wherein the data packet corresponds to the first slice identifier.

US2014/064246 A1 discloses a radio access network, a transport network, a core network. Access nodes may be GTP-U access nodes (GPRS Tunneling protocol - user plane). A TEID identifies a unicast GTP-U tunnel endpoint in the receiving GTP-U node for a given GTP-U endpoint. The TEID is included in a GTP header of a GTP-U packet. An uplink packet sent from the terminal, an uplink packet, e.g., uplink GTP-U traffic, can be transmitted from access node to core node. In order for the uplink packet to reach core node, an access node sends the uplink packet to a proxy node using its GTP-U interface. The packet includes a header, such as an IP header, that includes a source address field and a destination address field.

### SUMMARY

A problem existing in designing and implementing an efficient end-to-end communications network is how to manage resources in subnets of domains in collaboration in an end-to-end subnet to achieve consistent end-to-end network service experience.

Embodiments of the present invention are defined by the appended claims. The subnet in this application may include a slice and/or a slice instance. The slice is a logical network that has a predefined network capability and a predefined network feature and that is provided for a specific service or tenant. The slice may include an end-to-end slice and a subdomain slice. The subdomain slice may be a part of the end-to-end slice. The slice instance is a network function entity that includes a group of network function instances and network resources, and may include an end-to-end slice instance and a subdomain slice instance. The subdomain slice instance may be a part of the end-to-end slice instance. For ease of understanding, an objective of the solutions of the embodiments of this application may be expressed as follows: During creation of an end-to-end subnet, each subdomain subnet associated with the end-to-end subnet is created, so that when user equipment (user equipment, UE) is associated with an end-to-end network subnet, subdomains can serve the UE by using subnets that are consistent with the end-to-end subnet. Subdomains can provide differentiated services for different subnets, and can provide different quality of service for different services of a same subnet, and such differentiated processing is consistent between the subdomains in the end-to-end subnet.

In view of this, using an end-to-end subnet (slice) in a 5G system as an example, the embodiments of this application provide a method for mapping subnets (slices) between a RAN subdomain, a CN subdomain, and a TN subdomain belonging to the end-to-end subnet, for example, a method for a mapping between a RAN subnet and a TN subnet and an intra-subnet QoS mapping method.

This application provides a communication method, a device, a system, and the like, to implement a mapping and collaboration between subnets (slices) of a RAN subdomain, a CN subdomain, and a TN subdomain in a same end-to-end subnet, so that resources in different subdomains can be managed in collaboration in the end-to-end subnet, system efficiency of communication of the end-to-end subnet can be increased, and end-to-end service experience consistency can be improved.

According to a first aspect, this application provides a communication method. The method includes: receiving, by a radio access network device, an uplink data packet from a terminal device; learning of, by the radio access network device, identity information of the uplink data packet; and adding, by the radio access network device, the uplink data packet to a transport network subnet based on a correspondence between the identity information of the uplink data packet and the transport network subnet. According to the method, the radio access network device can reliably and efficiently add uplink data to a corresponding transport network subnet for transmission.

In some possible implementations, the identity information of the uplink data packet includes at least one of the following: information about an identifier of a packet data connection associated with the uplink data packet, information about an identifier of a GPRS tunneling protocol-user plane part associated with the uplink data packet, information about an identifier of a data flow associated with the uplink data packet, and information about an identifier of a data radio bearer (data radio bearer, DRB) associated with the uplink data packet. The identity information of the uplink data packet may be obtained based on any one piece of the information or a combination of any two or more pieces of the information. The packet data connection described herein may be a session (Session). The data flow described herein may be a group of data packets with same or similar quality of service requirements, for example, a QoS flow discussed in a standard setting process. In this example, the identity information of the uplink data packet is obtained by using (at least one, which is not specifically limited, of) the packet data connection, the GPRS tunneling protocol-user plane part, the data flow, and the data radio bearer that have an association relationship with the uplink data packet.

In some possible implementations, there is a correspondence between the identity information of the uplink data packet and a radio access network subnet (or slice), or information about an identifier of the radio access network subnet (or slice) includes the identity information; and there is a correspondence between the radio access network subnet (or slice) and the transport network subnet (or slice), so that there is a correspondence between the identity information and the transport network subnet (or slice). For example, before the radio access network device adds the uplink data packet to the transport network subnet (or slice), the radio access network device may obtain the correspondence between the radio access network subnet (or slice) and the transport network subnet (or slice) in advance. Therefore, a correspondence between the identity information of the uplink data packet, the radio access network subnet (or slice), and the transport network subnet (or slice) is obtained, so that the uplink data packet can be reliably and efficiently added to the corresponding transport network subnet for transmission; or when the information about the identifier of the radio access network subnet (or slice) carries the identity information of the uplink data packet, the uplink data packet is added, by using the correspondence between the radio access network subnet (or slice) and the transport network subnet (or slice), to the corresponding transport network subnet for transmission. Optionally, the identifier of the radio access network subnet (or slice) may be an identifier of the identity information of the uplink data packet.

In some possible implementations, a process in which the radio access network device obtains the correspondence between the radio access network subnet (or slice) and the transport network subnet (or slice) may include the following: Information about the correspondence between the radio access network subnet (or slice) and the transport network subnet (or slice) may be configured by using a system management plane. An information exchange interface may be disposed between any two of a network manager, a transport network manager, a radio access network manager, and a core network manager in the system management plane, and the information about the correspondence between the radio access network subnet (or slice) and the transport network subnet (or slice) may be transmitted between the network manager, the transport network manager, the radio access network manager, and the core network manager through information exchange interfaces, so that the network manager, the transport network manager, the radio access network manager, and the core network manager can learn of the correspondence. Optionally, the information about the correspondence is configured on the system management plane before the radio access network device adds the uplink data packet to the transport network subnet (slice) for transmission, so that the radio access network device obtains the information about the correspondence.

For example, the information about the correspondence between the radio access network subnet (or slice) and the transport network subnet (or slice) may be sent by the transport network manager to the radio access network manager through an information exchange interface between the transport network manager and the radio access network manager, and then the information about the correspondence may be sent by the radio access network manager to the radio access network device through an interface between the radio access network manager and the radio access network device. Alternatively, the information about the correspondence may be sent by the transport network manager to the network manager through an interface between the transport network manager and the network manager, the information about the correspondence may be sent by the network manager to the radio access network manager through an interface between the network manager and the radio access network manager, and the information about the correspondence may be sent by the radio access network manager to the radio access network device through an interface between the radio access network manager and the radio access network device.

In some possible implementations, there is a correspondence between each of the radio access network subnet (or slice) and the transport network subnet (or slice) and an end-to-end subnet (or slice) created by the network manager, so that a correspondence can be established between the radio access network subnet and the transport network subnet. Optionally, before the transport network manager sends the information about the correspondence between the radio access network subnet (or slice) and the transport network subnet (or slice) to the network manager or the radio access network manager, the transport network manager obtains the correspondence between the radio access network subnet (or slice) and the transport network subnet (or slice) based on the end-to-end subnet (or slice) created by the network manager.

In some possible implementations, there is a correspondence between the end-to-end subnet (slice) and network slice selection assistance information (NSSAI); or an identifier of the end-to-end subnet is network slice selection assistance information. Optionally, the network slice selection assistance information may be carried in a non-access stratum (non-access stratum, NAS) message, and is sent by the terminal device to a related device in a core network; and/or the network slice selection assistance information may be carried in an RRC (Radio Resource Connection) message, and is sent by the terminal device to the radio access network device.

In some possible implementations, there is a correspondence between the radio access network subnet (or slice) and a core network subnet (or slice), and there is a correspondence between the core network subnet (or slice) and the end-to-end subnet (or slice). In this case, the radio access network device may learn of, based on an obtained core network subnet (or slice), a subnet (or slice) corresponding to a radio access network device side belonging to a same end-to-end subnet (or slice).

In some possible implementations, that the uplink data packet is added to the transport network subnet includes: the uplink data packet includes information about an identifier of the transport network subnet (or slice). For example, on a radio access network device side, the uplink data packet is processed, and the information about the identifier of the transport network subnet is added to the uplink data packet. Optionally, in some possible implementations, if the transport network subnet (or slice) is a virtual local area network, the information about the identifier of the transport network subnet (or slice) includes an identifier of the virtual local area network (virtual local area network ID, VLAN ID). Optionally, in some possible implementations, the information about the identifier of the transport network subnet includes at least one of the following: a port number of an IP network and an Internet protocol address. The transport network subnet (or slice) may be identified by using the information about the identifier of the transport network subnet (or slice), for example, the VLAN ID, the port number of the IP network, and the Internet protocol address, so that the uplink data packet can be added to the corresponding transport network subnet.

According to a second aspect, this application provides a radio access network device. The radio access network device includes at least one processor, a memory, a first transceiver apparatus, a second transceiver apparatus, and a system bus. The at least one processor, the memory, the first transceiver apparatus, and the second transceiver apparatus are coupled by using the system bus. The radio access network device communicates with a network side device by using the first transceiver apparatus, and the radio access network device communicates with a terminal device by using the second transceiver apparatus. The memory stores a program instruction, and the at least one processor invokes the program instruction stored in the memory to perform the operations of the radio access network device in any one of the first aspect or the possible implementations of the first aspect. Optionally, the first transceiver apparatus described herein may be specifically implemented as a wired communications interface, or may be specifically implemented as a communications interface based on a wireless air interface technology. The second transceiver apparatus described herein may be specifically implemented as a communications interface based on the wireless air interface technology. Optionally, if both the first transceiver apparatus and the second transceiver apparatus are communications interfaces based on the wireless air interface technology, the first transceiver apparatus and the second transceiver apparatus may be implemented by using one wireless transceiver apparatus, or may be implemented by using two parallel wireless transceiver apparatuses.

According to a third aspect, this application provides a system chip. The system chip may be applied to a radio access network device. Through processing performed by the system chip, the radio access network device can perform the operations of the radio access network device in any one of the first aspect or the possible implementations of the first aspect. The system chip includes at least one processor, a memory, an interface circuit, and a bus. The at least one processor, the memory, and the interface circuit are coupled by using the bus. The system chip interacts with the radio access network device/another device in a network by using the interface circuit. The memory stores a program instruction, and the at least one processor invokes the program instruction stored in the memory to perform the operations of the radio access network device in any one of the first aspect or the feasible methods of the first aspect.

According to a fourth aspect, this application provides a communication method. The method includes: obtaining, by a core network device, identity information of a downlink data packet; and adding, by the core network device based on a correspondence between the identity information of the downlink data packet and a transport network subnet, the downlink data packet to the transport network subnet for transmission. According to the method, the core network device can reliably and efficiently add downlink data to a corresponding transport network subnet for transmission.

In some possible implementations, the identity information of the downlink data packet includes at least one of the following: information about an identifier of a packet data connection associated with the downlink data packet, information about an identifier of a GPRS tunneling protocol-user plane part associated with the downlink data packet, information about an identifier of a data flow associated with the downlink data packet, and information about an identifier of a data radio bearer (data radio bearer, DRB) associated with the downlink data packet. The identity information of the downlink data packet may be obtained based on any one piece of the information or a combination of any two or more pieces of the information. The packet data connection described herein may be a session (session). The data flow described herein may be a group of data packets with same or similar quality of service requirements, for example, a QoS flow discussed in a standard setting process. In this example, the identity information of the downlink data packet is obtained by using (at least one, which is not specifically limited, of) the packet data connection, the GPRS tunneling protocol-user plane part, the data flow, and the data radio bearer that have an association relationship with the downlink data packet.

In some possible implementations, there is a correspondence between the identity information of the downlink data packet and a core network subnet (or slice), or information about an identifier of the core network subnet (or slice) includes the identity information of the downlink data packet; and there is a correspondence between the core network subnet (or slice) and the transport network subnet (or slice), so that a correspondence can be established between the identity information of the downlink data packet and the transport network subnet (or slice). For example, before the core network device adds the downlink data packet to the transport network subnet (or slice), the core network device may obtain the correspondence between the core network subnet (or slice) and the transport network subnet (or slice) in advance. Therefore, a correspondence between the identity information of the downlink data packet, the core network subnet (or slice), and the transport network subnet (or slice) is obtained, so that the downlink data packet can be reliably and efficiently added to the corresponding transport network subnet for transmission; or when the information about the identifier of the core network subnet (or slice) includes the identity information of the downlink data packet, the downlink data packet is added, by using the correspondence between the core network subnet (or slice) and the transport network subnet (or slice), to the corresponding transport network subnet for transmission. Optionally, the identifier of the core network subnet (or slice) may be an identifier of the identity information of the downlink data packet.

In some possible implementations, a process in which the core network device obtains the correspondence between the core network subnet (or slice) and the transport network subnet (or slice) may include the following: Information about the correspondence between the core network subnet (or slice) and the transport network subnet (or slice) may be configured by using a system management plane. An information exchange interface may be disposed between any two of a network manager, a transport network manager, a radio access network manager, and a core network manager in the system management plane, and the information about the correspondence between the core network subnet (or slice) and the transport network subnet (or slice) may be transmitted between the network manager, the transport network manager, the radio access network manager, and the core network manager through information exchange interfaces, so that the network manager, the transport network manager, the radio access network manager, and the core network manager can learn of the correspondence. Optionally, the information about the correspondence is configured on the system management plane before the core network device adds the downlink data packet to the transport network subnet (slice) for transmission, so that the core network device obtains the information about the correspondence. For example, the information about the correspondence between the core network subnet (or slice) and the transport network subnet (or slice) may be sent by the transport network manager to the core network manager through an information exchange interface between the transport network manager and the core network manager, and then the information about the correspondence may be sent by the core network manager to the core network device through an interface between the core network manager and the core network device. Alternatively, the information about the correspondence may be sent by the transport network manager to the network manager through an interface between the transport network manager and the network manager, the information about the correspondence may be sent by the network manager to the core network manager through an interface between the network manager and the core network manager, and the information about the correspondence may be sent by the core network manager to the core network device through an interface between the core network manager and the core network device.

In some possible implementations, there is a correspondence between each of the core network subnet (or slice) and the transport network subnet (slice) and an end-to-end subnet (or slice) created by the network manager, so that a correspondence can be established between the core network subnet (or slice) and the transport network subnet (or slice). Optionally, before the transport network manager sends the information about the correspondence between the core network subnet (or slice) and the transport network subnet (slice) to the network manager or the core network manager, the transport network manager obtains the correspondence between the core network subnet (or slice) and the transport network subnet (or slice) based on the end-to-end subnet (or slice) created by the network manager.

In some possible implementations, there is a correspondence between the end-to-end subnet (or slice) and network slice selection assistance information (NSSAI); or an identifier of the end-to-end subnet is network slice selection assistance information. Optionally, the network slice selection assistance information may be carried in a non-access stratum (non-access stratum, NAS) message, and is sent by a terminal device to a related device in a core network; and/or the network slice selection assistance information may be carried in an RRC (Radio Resource Connection) message, and is sent by the terminal device to a radio access network device.

In some possible implementations, that the downlink data packet is added to the transport network subnet includes: the downlink data packet includes information about an identifier of the transport network subnet (or slice). For example, on a core network side, the downlink data packet is processed, and the information about the identifier of the transport network subnet is added to the downlink data packet. Optionally, in some possible implementations, if the transport network subnet (or slice) is a virtual local area network, the information about the identifier of the transport network subnet (or slice) includes an identifier of the virtual local area network (virtual local area network ID, VLAN ID). Optionally, in some possible implementations, the information about the identifier of the transport network subnet may further include at least one of the following: a port number of an IP network and an Internet protocol address. The transport network subnet (or slice) may be identified by using the information about the identifier of the transport network subnet (or slice), for example, the VLAN ID, the port number of the IP network, and the Internet protocol address, so that the downlink data packet can be added to the corresponding transport network subnet.

According to a fifth aspect, this application provides a core network device. The core network device includes at least one processor, a memory, a transceiver apparatus, and a system bus. The at least one processor, the memory, and the transceiver apparatus are coupled by using the system bus. The core network device communicates with a network side device by using the transceiver apparatus. The memory stores a program instruction, and the at least one processor invokes the program instruction stored in the memory to perform the operations of the core network device in any one of the fourth aspect or the possible implementations of the fourth aspect.

According to a sixth aspect, this application provides a system chip. The system chip may be applied to a core network device. Through processing performed by the system chip, the core network device can perform the operations of the core network device in any one of the fourth aspect or the possible implementations of the fourth aspect. The system chip includes at least one processor, a memory, an interface circuit, and a bus. The at least one processor, the memory, and the interface circuit are coupled by using the bus. The system chip interacts with the core network device/another device in a network by using the interface circuit. The memory stores a program instruction, and the at least one processor invokes the program instruction stored in the memory to perform the operations of the core network device in any one of the fourth aspect or the possible implementations of the fourth aspect.

According to a seventh aspect, this application provides a communications system. The system includes the radio access network device according to the second aspect and/or the core network device according to the fifth aspect.

According to an eighth aspect, this application provides a computer storage medium. The computer-readable storage medium stores a program instruction, and when the program instruction runs on a computer, the operations of the radio access network device in any one of the first aspect or the possible implementations of the first aspect are performed, or when the program instruction runs on a computer, the operations of the core network device in any one of the fourth aspect or the possible implementations of the fourth aspect are performed.

According to a ninth aspect, this application provides a computer program product. The computer program product includes a program instruction, and when the program instruction is invoked, the operations of the radio access network device in any one of the first aspect or the possible implementations of the first aspect are performed, or when the program instruction is invoked, the operations of the core network device in any one of the fourth aspect or the possible implementations of the fourth aspect are performed.

According to the communication method, the devices, the system, and the like provided in this application, a mapping and collaboration can be implemented between subnets (or slices) of a RAN subdomain, a CN subdomain, and a TN subdomain that belong to a same end-to-end subnet, so that data can be reliably and efficiently processed in the subdomains in the end-to-end subnet, thereby increasing system efficiency of communication of the end-to-end subnet and improving end-to-end service experience consistency.

### DESCRIPTION OF DRAWINGS

FIG. 1-1 is a schematic diagram of a communications network system 100-1 according to this application;
FIG. 1-2 is a schematic diagram of a network management system 100-2 according to this application;
FIG. 2 is a schematic flowchart of a communication method 200 according to an embodiment of this application;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a schematic diagram of running of a communications system 600 according to an embodiment of this application;
FIG. 7 is a schematic flowchart of an optional communication method 700 in a part 1 according to an embodiment of this application;
FIG. 8 is a schematic flowchart of an optional communication method 800 in the part 1 according to an embodiment of this application;
FIG. 9 is a schematic flowchart of an optional communication method 900 in the part 1 according to an embodiment of this application;
FIG. 10 is a schematic diagram of a communication method and a system 1000 according to an embodiment of this application;
FIG. 11 is a schematic flowchart of a communication method 1100 according to an embodiment of this application;
FIG. 12 is a schematic flowchart of a communication method 1200 according to an embodiment of this application;
FIG. 13 is a schematic diagram of a protocol stack of a RAN-CN interface according to an embodiment of this application;
FIG. 14 is a schematic flowchart of a communication method 1400 according to an embodiment of this application;
FIG. 15 is a schematic flowchart of a communication method 1500 according to an embodiment of this application;
FIG. 16 is a schematic block diagram of a radio access network device 1600 according to an embodiment of this application;
FIG. 17 is a schematic block diagram of a radio access network device 1700 according to an embodiment of this application;
FIG. 18 is a schematic block diagram of a system chip 1800 according to an embodiment of this application;
FIG. 19 is a schematic block diagram of a core network device 1900 according to an embodiment of this application;
FIG. 20 is a schematic block diagram of a core network device 2000 according to an embodiment of this application;
FIG. 21 is a schematic block diagram of a system chip 2100 according to an embodiment of this application; and
FIG. 22 is a schematic diagram of a wireless communications system 2200 according to an embodiment of this application.

### DESCRIPTION OF EMBODIMENTS

The following describes technical solutions of this application with reference to the accompanying drawings.

This application provides a communication method. The method may relate to a radio access network device, a core network device, a transport network device, a terminal device, a wireless communications system configured to run the method, and a management plane system of the wireless communications system. The management plane system may include a network manager, a RAN subdomain manager, a CN subdomain manager, a TN subdomain manager, and the like.

The radio access network device in this application may also be referred to as a base station in a wireless communication standard, and in most scenarios, is an apparatus deployed in a radio access network to provide a wireless communication function for the terminal device. The radio access network device in this application includes but is not limited to various forms of macro base stations, micro base stations (also referred to as small cells), relay stations, transmission reception points (Transmission Reception Point, TRP), evolved NodeBs (evolved NodeB, eNB), radio network controllers (radio network controller, RNC), NodeBs (NodeB, NB), base station controllers (Base Station Controller, BSC), base transceiver stations (Base Transceiver Station, BTS), home eNodeBs or home NodeBs (for example, Home evolved NodeBs or Home NodeBs, HNB), and baseband units (Base Band Unit, BBU) for processing communication data, and the like. The radio access network device may further include a radio access network device in a non-3rd generation partnership project (Third Generation Partnership Project, 3GPP) system, for example, a wireless local area network (wireless local area network, WLAN) access device. In systems using different radio access technologies, names of radio access network devices with similar wireless communication functions may be different. Merely for ease of description, in the embodiments of this application, the foregoing apparatuses that can provide a wireless communication function for the terminal device are collectively referred to as a radio access network device. A RAN subdomain in the embodiments of this application may include at least one radio access network device described herein, or may correspond to at least one radio access network device described herein.

The core network device in this application is usually an entity with a core network processing function, for example, may be any one of the following devices: a device with an access and/or mobility management network function, a device with a control plane function of session management, a device with a user plane function that is responsible for data transmission, a device with an authentication management network function, and a device that performs another type of function required by a core network. Alternatively, the core network device described herein is a device with at least any one or any combination of the core network functions mentioned above. Merely for ease of description, in the embodiments of this application, the foregoing entities with a core network function are collectively referred to as a core network device. A CN subdomain in the embodiments of this application may include at least one core network device described herein, or may correspond to at least one core network device described herein.

A transport network in this application is usually a network that is used to provide a data transmission and conversion function. A transport type may be any one of an optical transport network, an IP transport network, or a flexible ethernet (flexible ethernet) transport network, or another type of transport network. This is not limited herein. The transport network device may usually include at least one of the following: a routing and forwarding node, a switch, a hub, a repeater, a bridge, and the like, or a device with at least one or any combination of the foregoing functions. Merely for ease of description, in the embodiments of this application, the foregoing entities with a data transmission and conversion function are collectively referred to as a transport network device. A TN subdomain in the embodiments of this application may include at least one transport network device described herein, or may correspond to at least one transport network device described herein.

The terminal device in this application is a device with a wireless transceiver function, and the terminal device may be deployed on land, for example, an indoor device, an outdoor device, a handheld device, or an in-vehicle device, or may be deployed on the water (for example, on a ship), or may be deployed in the air (for example, on a plane, a balloon, or a satellite). The terminal device may include various types of mobile phones (mobile phone), tablet computers (Pad), computers with a wireless transceiver function, wireless data cards, virtual reality (Virtual Reality, VR) terminal devices, augmented reality (augmented reality, AR) terminal devices, machine type communication (machine type communication, MTC) terminal devices, terminal devices in industrial control (industrial control), self-driving (self driving) terminal devices, remote medical (remote medical) terminal devices, terminal devices in a smart grid (smart grid), terminal devices in transportation safety (transportation safety), terminal devices in a smart city (smart city), smart households (household devices with a wireless communication function, for example, refrigerators, television sets, washers, or furniture), wearable devices (for example, smartwatches, smart bands, and pedometers), and the like. Alternatively, the terminal device in this application may be a device that is disposed in a fixed position and that has a wireless communication function similar to that of the foregoing terminal device. In systems using different radio access technologies, names of terminal devices with similar wireless communication functions may be different. Merely for ease of description, in the embodiments of this application, the foregoing apparatuses with a wireless transceiver communication function are collectively referred to as a terminal device.

Terms "uplink" and "downlink" in this application are used to describe data/information transmission directions in some scenarios. For example, an "uplink" direction is a direction in which data/information is transmitted from the terminal device to the core network device, and a "downlink" direction is a direction in which data/information is transmitted from the core network device to the terminal device. "Uplink" and "downlink" are used to describe only directions. Neither a specific device from which data/information transmission starts nor a specific device at which data/information transmission stops is limited.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

The character "-" in this application is usually used to indicate that there is an association/mapping relationship between objects before and after the character. To be specific, "A-B" indicates that there is an association/mapping relationship between A and B. For example, an end-to-end subnet is created in a system, and a subdomain subnet is created by each of a RAN subdomain, a CN subdomain, and a TN subdomain that correspond to the end-to-end subnet, to implement the end-to-end subnet. A correspondence/mapping relationship based on the end-to-end subnet exists between a RAN, a CN, and a TN, and is denoted as RAN-CN-TN.

In this patent application, names may be assigned to various types of objects such as messages/information/devices/network elements/systems/apparatuses/actions/operations/procedures/concepts. However, these specific names do not constitute a limitation on the related objects. The assigned names may vary with a factor such as a scenario, a context, or a usage habit. An understanding of a technical meaning of a related object should be mainly determined from a function and a technical effect that are embodied/performed in a technical solution.

The network architecture and the service scenario described in the embodiments of the present invention are intended to describe the technical solutions in the embodiments of the present invention more clearly, and do not constitute a limitation on the technical solutions provided in the embodiments of the present invention. A person of ordinary skill in the art can learn that with evolution of the network architecture and emergence of a new service scenario, the technical solutions provided in the embodiments of the present invention are also applicable to similar technical problems.

As shown in FIG. 2, an embodiment of this application provides a communication method 200. An implementation process based on an idea of the method 200 includes the following operations:
Operation 201: A radio access network device receives an uplink data packet from a terminal device.

Operation 202: The radio access network device learns of identity information of the uplink data packet.

Operation 203: The radio access network device adds, based on a correspondence between the identity information of the uplink data packet and a transport network subnet, the uplink data packet to the corresponding transport network subnet for transmission.

The method 200 is described from a perspective of a radio access network side. It may be understood that the method 200 may be applied to a communications system including a terminal device, a radio access network device, and a transport network. According to the method 200, the radio access network device can reliably and efficiently add uplink data to a corresponding transport network subnet (slice) for transmission.

According to the method 200, in some possible implementations, the identity information of the uplink data packet may include at least one of the following: information about an identifier of a packet data connection associated with the uplink data packet, information about an identifier of a GPRS tunneling protocol-user plane part associated with the uplink data packet, information about an identifier of a data flow associated with the uplink data packet, and information about an identifier of a data radio bearer (data radio bearer, DRB) associated with the uplink data packet. The identity information of the uplink data packet may be obtained based on any one piece of the information or a combination of any two or more pieces of the information. The packet data connection described herein may be a session (session). The data flow described herein may be a group of data packets with same or similar quality of service requirements, for example, a QoS flow discussed in a standard setting process. In this example, the identity information of the uplink data packet is obtained by using (at least one, which is not specifically limited, of) the packet data connection, the GPRS tunneling protocol-user plane part, the data flow, and the data radio bearer that have an association relationship with the uplink data packet. Optionally, the identity information of the uplink data packet may be at least one of the following: the identifier of the packet data connection associated with the uplink data packet, the identifier of the GPRS tunneling protocol-user plane part associated with the uplink data packet, the identifier of the data flow associated with the uplink data packet, and the identifier of the data radio bearer (data radio bearer, DRB) associated with the uplink data packet.

According to the method 200, in some possible implementations, there is a correspondence between the identity information of the uplink data packet and a radio access network subnet (or slice), or information about an identifier of the radio access network subnet (or slice) includes the identity information; and there is a correspondence between the radio access network subnet (or slice) and the transport network subnet (or slice), so that there is a correspondence between the identity information and the transport network subnet (or slice). For example, before the radio access network device adds the uplink data packet to the transport network subnet (or slice), the radio access network device may obtain the correspondence between the radio access network subnet (or slice) and the transport network subnet (or slice) in advance. Therefore, a correspondence between the identity information of the uplink data packet, the radio access network subnet (or slice), and the transport network subnet (or slice) is obtained, so that the uplink data packet can be reliably and efficiently added to the corresponding transport network subnet for transmission; or when the information about the identifier of the radio access network subnet (or slice) carries the identity information of the uplink data packet, the uplink data packet is added, by using the correspondence between the radio access network subnet (or slice) and the transport network subnet (or slice), to the corresponding transport network subnet for transmission. Optionally, the identifier of the radio access network subnet (or slice) may be an identifier of the identity information of the uplink data packet.

According to the method 200, in some possible implementations, a process in which the radio access network device obtains the correspondence between the radio access network subnet (or slice) and the transport network subnet (or slice) may include the following: Information about the correspondence between the radio access network subnet (or slice) and the transport network subnet (or slice) may be configured by using a system management plane. An information exchange interface may be disposed between any two of a network manager, a transport network manager, a radio access network manager, and a core network manager in the system management plane, and the information about the correspondence between the radio access network subnet (or slice) and the transport network subnet (or slice) may be transferred between the network manager, the transport network manager, the radio access network manager, and the core network manager through information exchange interfaces, so that the network manager, the transport network manager, the radio access network manager, and the core network manager can learn of the correspondence. Optionally, the information about the correspondence is configured on the system management plane before the radio access network device adds the uplink data packet to the transport network subnet (slice) for transmission, so that the radio access network device obtains the information about the correspondence.

For example, the information about the correspondence between the radio access network subnet (or slice) and the transport network subnet (or slice) may be sent by the transport network manager to the radio access network manager through an information exchange interface between the transport network manager and the radio access network manager, and then the information about the correspondence may be sent by the radio access network manager to the radio access network device through an interface between the radio access network manager and the radio access network device. Alternatively, the information about the correspondence may be sent by the transport network manager to the network manager through an interface between the transport network manager and the network manager, the information about the correspondence may be sent by the network manager to the radio access network manager through an interface between the network manager and the radio access network manager, and the information about the correspondence may be sent by the radio access network manager to the radio access network device through an interface between the radio access network manager and the radio access network device.

According to the method 200, in some possible implementations, there is a correspondence between each of the radio access network subnet (or slice) and the transport network subnet (or slice) and an end-to-end subnet (or slice) created by the network manager, so that a correspondence can be established between the radio access network subnet and the transport network subnet. Optionally, before the transport network manager sends the information about the correspondence between the radio access network subnet (or slice) and the transport network subnet (or slice) to the network manager or the radio access network manager, the transport network manager obtains the correspondence between the radio access network subnet (or slice) and the transport network subnet (or slice) based on the end-to-end subnet (or slice) created by the network manager.

According to the method 200, in some possible implementations, there is a correspondence between the end-to-end subnet (slice) and network slice selection assistance information (NSSAI); or an identifier of the end-to-end subnet is network slice selection assistance information. Optionally, the network slice selection assistance information may be carried in a non-access stratum (non-access stratum, NAS) message, and is sent by the terminal device to a related device in a core network; and/or the network slice selection assistance information may be carried in an RRC (Radio Resource Connection) message, and is sent by the terminal device to the radio access network device.

According to the method 200, in some possible implementations, there is a correspondence between the radio access network subnet (or slice) and a core network subnet (or slice), and there is a correspondence between the core network subnet (or slice) and the end-to-end subnet (or slice). In this case, the radio access network device may learn of, based on an obtained core network subnet (or slice), a subnet (or slice) corresponding to a radio access network device side belonging to a same end-to-end subnet (or slice).

According to the method 200, in some possible implementations, that the uplink data packet is added to the transport network subnet includes: the uplink data packet includes information about an identifier of the transport network subnet (or slice). For example, on a radio access network device side, the uplink data packet is processed, and the information about the identifier of the transport network subnet is added to the uplink data packet. Optionally, in some possible implementations, if the transport network subnet (or slice) is a virtual local area network, the information about the identifier of the transport network subnet (or slice) includes an identifier of the virtual local area network (virtual local area network ID, VLAN ID). Optionally, in some possible implementations, the information about the identifier of the transport network subnet includes at least one of the following: a port number of an IP network and an Internet protocol address. The transport network subnet (or slice) may be identified by using the information about the identifier of the transport network subnet (or slice), for example, the VLAN ID, the port number of the IP network, and the Internet protocol address, so that the uplink data packet can be added to the corresponding transport network subnet.

According to the communication method 200, the involved devices, and the involved system, a mapping and collaboration can be implemented between subnets (or slices) of a RAN subdomain, a CN subdomain, and a TN subdomain that belong to a same end-to-end subnet, so that data can be reliably and efficiently processed in the subdomains in the end-to-end subnet, thereby increasing system efficiency of communication of the end-to-end subnet and improving end-to-end service experience consistency.

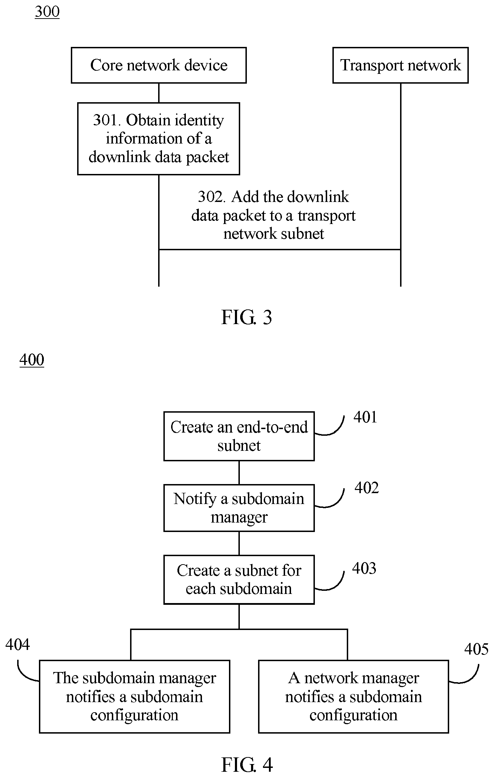

As shown in FIG. 3, this application provides a communication method 300. An implementation process based on an idea of the method 300 includes the following operations:
Operation 301: A core network device learns of identity information of a downlink data packet.

Operation 302: The core network device adds the downlink data packet to a transport network subnet based on a correspondence between the identity information of the downlink data packet and the transport network subnet.

The method 300 is described from a perspective of a core network side. It may be understood that the method 300 may be applied to a communications system including a core network device and a transport network. According to the method, the core network device can reliably and efficiently add downlink data to a corresponding transport network subnet (or slice) for transmission.

According to the method 300, in some possible implementations, the identity information of the downlink data packet includes at least one of the following: information about an identifier of a packet data connection associated with the downlink data packet, information about an identifier of a GPRS tunneling protocol-user plane part associated with the downlink data packet, information about an identifier of a data flow associated with the downlink data packet, and information about an identifier of a data radio bearer (data radio bearer, DRB) associated with the downlink data packet. The identity information of the downlink data packet may be obtained based on any one piece of the information or a combination of any two or more pieces of the information. The packet data connection described herein may be a session (session). The data flow described herein may be a group of data packets with same or similar quality of service requirements, for example, a QoS flow discussed in a standard setting process. In this example, the identity information of the downlink data packet is obtained by using (at least one, which is not specifically limited, of) the packet data connection, the GPRS tunneling protocol-user plane part, the data flow, and the data radio bearer that have an association relationship with the downlink data packet. Optionally, the identity information of the downlink data packet may be at least one of the following: the identifier of the packet data connection associated with the downlink data packet, the identifier of the GPRS tunneling protocol-user plane part associated with the downlink data packet, the identifier of the data flow associated with the downlink data packet, and the identifier of the data radio bearer (data radio bearer, DRB) associated with the downlink data packet.

According to the method 300, in some possible implementations, there is a correspondence between the identity information of the downlink data packet and a core network subnet (or slice), or information about an identifier of the core network subnet (or slice) includes the identity information of the downlink data packet; and there is a correspondence between the core network subnet (or slice) and the transport network subnet (or slice), so that a correspondence can be established between the identity information of the downlink data packet and the transport network subnet (or slice). For example, before the core network device adds the downlink data packet to the transport network subnet (or slice), the core network device may obtain the correspondence between the core network subnet (or slice) and the transport network subnet (or slice) in advance. Therefore, a correspondence between the identity information of the downlink data packet, the core network subnet (or slice), and the transport network subnet (or slice) is obtained, so that the downlink data packet can be reliably and efficiently added to the corresponding transport network subnet for transmission; or when the information about the identifier of the core network subnet (or slice) includes the identity information of the downlink data packet, the downlink data packet is added, by using the correspondence between the core network subnet (or slice) and the transport network subnet (or slice), to the corresponding transport network subnet for transmission. Optionally, the identifier of the core network subnet (or slice) may be an identifier of the identity information of the downlink data packet. According to the method 300, in some possible implementations, a process in which the core network device obtains the correspondence between the core network subnet (or slice) and the transport network subnet (or slice) may include the following: Information about the correspondence between the core network subnet (or slice) and the transport network subnet (or slice) may be configured by using a system management plane. An information exchange interface may be disposed between any two of a network manager, a transport network manager, a radio access network manager, and a core network manager in the system management plane, and the information about the correspondence between the core network subnet (or slice) and the transport network subnet (or slice) may be transmitted between the network manager, the transport network manager, the radio access network manager, and the core network manager through information exchange interfaces, so that the network manager, the transport network manager, the radio access network manager, and the core network manager can learn of the correspondence. Optionally, the information about the correspondence is configured on the system management plane before the core network device adds the downlink data packet to the transport network subnet (slice) for transmission, so that the core network device obtains the information about the correspondence.

For example, the information about the correspondence between the core network subnet (or slice) and the transport network subnet (or slice) may be sent by the transport network manager to the core network manager through an information exchange interface between the transport network manager and the core network manager, and then the information about the correspondence may be sent by the core network manager to the core network device through an interface between the core network manager and the core network device. Alternatively, the information about the correspondence may be sent by the transport network manager to the network manager through an interface between the transport network manager and the network manager, the information about the correspondence may be sent by the network manager to the core network manager through an interface between the network manager and the core network manager, and the information about the correspondence may be sent by the core network manager to the core network device through an interface between the core network manager and the core network device.

According to the method 300, in some possible implementations, there is a correspondence between each of the core network subnet (or slice) and the transport network subnet (slice) and an end-to-end subnet (or slice) created by the network manager, so that a correspondence can be established between the core network subnet (or slice) and the transport network subnet (or slice). Optionally, before the transport network manager sends the information about the correspondence between the core network subnet (or slice) and the transport network subnet (slice) to the network manager or the core network manager, the transport network manager obtains the correspondence between the core network subnet (or slice) and the transport network subnet (or slice) based on the end-to-end subnet (or slice) created by the network manager. According to the method 300, in some possible implementations, there is a correspondence between the end-to-end subnet (or slice) and network slice selection assistance information (NSSAI); or an identifier of the end-to-end subnet is network slice selection assistance information. Optionally, the network slice selection assistance information may be carried in a non-access stratum (non-access stratum, NAS) message, and is sent by a terminal device to a related device in a core network; and/or the network slice selection assistance information may be carried in an RRC (Radio Resource Connection) message, and is sent by the terminal device to a radio access network device.

According to the method 300, in some possible implementations, that the downlink data packet is added to the transport network subnet includes: the downlink data packet includes information about an identifier of the transport network subnet (or slice). For example, on the core network side, the downlink data packet is processed, and the information about the identifier of the transport network subnet is added to the downlink data packet. Optionally, in some possible implementations, if the transport network subnet (or slice) is a virtual local area network, the information about the identifier of the transport network subnet (or slice) includes an identifier of the virtual local area network (virtual local area network ID, VLAN ID). Optionally, in some possible implementations, the information about the identifier of the transport network subnet may further include at least one of the following: a port number of an IP network and an Internet protocol address. The transport network subnet (or slice) may be identified by using the information about the identifier of the transport network subnet (or slice), for example, the VLAN ID, the port number of the IP network, and the Internet protocol address, so that the downlink data packet can be added to the corresponding transport network subnet.

According to the communication method 300, the involved devices, and the involved system, a mapping and collaboration can be implemented between subnets (or slices) of a CN subdomain and a TN subdomain that belong to a same end-to-end subnet, so that data can be reliably and efficiently processed in the subdomains in the end-to-end subnet, thereby increasing system efficiency of communication of the end-to-end subnet and improving end-to-end service experience consistency.

It may be understood that the communication method 200 is mainly described from a perspective of an uplink transmission direction of data and processing on the radio access network device side, and the communication method 300 is described from a perspective of a downlink transmission direction of data and processing on a core network device side. Optionally, the communication method 200 and the communication method 300 may be used in combination to complete processing of uplink/downlink data.

A hierarchical domain-based management system in a next generation 5G network is used as an example. As shown in FIG. 4, this application further provides a communication method 400. An implementation process based on an idea of the method 400 includes the following operations. Operation 401: Create an end-to-end subnet.

In a 5G system, a network manager for end-to-end slice management may be disposed, and the network manager creates the end-to-end subnet based on an input parameter such as a quality of service requirement of a customer.

Operation 402: Notify a subdomain manager.

The network manager configures a corresponding performance counter requirement and/or parameter of each subdomain subnet for the subnet created in operation 401, and sends the subdomain performance counter requirement and/or a required configuration parameter of each subdomain subnet to an involved subdomain manager. Optionally, the network manager may further send information about an identifier of the end-to-end subnet to each subdomain. The information about the identifier of the end-to-end subnet may be sent when the performance counter requirement and/or the required configuration parameter are delivered, or may be separately sent to each subdomain. The information about the identifier of the subnet may include any one or any combination of the following parameters: network slice selection assistance information (network slice selection assistance information, NSSAI), a slice type identifier (slice type ID), service management NSSAI (session management NSSAI, SM-NSSAI), single NSSAI (single NSSAI), a service type identifier (service type ID), a service type identifier of a subdomain, a tenant identifier (tenant ID), a user group identifier (user group ID), an index value (slice index) used to represent a slice type or a slice identifier, the identifier of the end-to-end subnet (subnet work ID), and information about an identifier of a subdomain subnet (for example, an identifier of a RAN subnet, an identifier of a CN subnet, or an identifier of a TN subnet). For example, the identifier of the subnet may be a slice identifier or a slice instance identifier.

Operation 403: Create a subnet for each subdomain.

Each subdomain manager receives various types of information sent by the network manager shown in operation 402. The information may be received from one piece of same information sent by the network manager, or may be received from a plurality of different information sent by the network manager. On this basis, each subdomain manager obtains at least a requirement corresponding to a performance counter of a subdomain of the subdomain manager, creates a subnet that is of the subdomain of the subdomain manager and that corresponds to the end-to-end subnet, and feeds back a result of creating the subnet of the subdomain of the subdomain manager. The result that is fed back includes but is not limited to "creation succeeds" or "creation fails".

Operation 404: (The operation is optional.) The subdomain manager notifies a subdomain configuration.

Each subdomain manager notifies the network manager and/or another subdomain manager of a specific configuration of the subnet of the subdomain of the subdomain manager and/or information about an identifier of an end-to-end subnet (slice) corresponding to the subnet created for the subdomain, so that subdomains collaborate with each other in the end-to-end subnet and subdomain subnets are associated with each other. For example, a TN manager notifies at least one of the network manager, a RAN manager, and a CN manager of a TN subnet (and optionally, information about an identifier of the TN subnet) created for an end-to-end subnet. The information about the identifier of the TN subnet may be information about an identifier of a TN subnet on a RAN internal interface (for example, an X2 interface or an Xn interface between base stations), or may be information about an identifier of a TN subnet on a CN internal interface (for example, an interface between an AMF and an SMF), or may be information about an identifier of a TN subnet on a RAN-CN interface (for example, an SI interface in 4G or an NG interface in 5G).

Operation 405: (The operation is optional.) The network manager notifies a subdomain configuration.

The network manager sends the subdomain configuration performed in a subdomain for an end-to-end subnet to another subdomain manager, so that the subdomain collaborates with another subdomain. For example, in operation 404, the TN manager notifies the network manager of a TN subnet created for an end-to-end subnet and information about an identifier of the TN subnet, and then the network manager separately sends the identifier of the transport subnet to the RAN manager and/or the CN manager through an interface between the network manager and the RAN manager or an interface between the network manager and the CN manager.

In this embodiment, for an end-to-end subnet, the network manager sends a parameter required for creating a subnet (or a subdomain slice) in a TN subdomain to the TN manager. Optionally, after the TN manager feeds back information (for example, an identifier of the created TN subnet) about an identifier of the transport subdomain subnet (slice) created by the TN manager to the network manager, the network manager sends the identifier of the TN subnet and a RAN/CN related parameter to the RAN/CN manager; or optionally, the TN manager directly sends the information about the identifier of the TN subdomain subnet to the RAN/CN manager, so that the RAN manager and/or the CN manager can learn of the TN subnet and the information about the identifier of the TN subnet. A radio access network device can learn of the TN subnet and the information about the identifier of the TN subnet through interaction between the RAN manager and the radio access network device, and/or a core network device can learn of the TN subnet and the information about the identifier of the TN subnet through interaction between the CN manager and the core network device. It can be learned from the foregoing description that there are at least two optional manners in which a RAN domain and a CN domain learn of the information about the identifier of the TN subnet:
Manner 1: The RAN manager learns of the information about the identifier of the TN subnet from the network manager by exchanging information through the interface between the RAN manager and the network manager; or the CN manager may learn of the information about the identifier of the TN subnet from the network manager by exchanging information through the interface between the CN manager and the network manager.

Manner 2: The RAN manager may learn of the information about the identifier of the TN subnet from the TN manager by exchanging information through an interface between the RAN manager and the TN manager; or the CN manager may learn of the information about the identifier of the TN subnet from the TN manager by exchanging information through an interface between the CN manager and the TN manager.

In this example, the RAN manager and/or the CN manager can learn of the TN subnet and the information about the identifier of the TN subnet, so that the radio access network device and/or the core network device can learn of the TN subnet (and optionally, can further learn of the information about the identifier of the TN subnet). In this way, a mapping and collaboration can be implemented between subnets (slices) of a RAN subdomain, a CN subdomain, and a TN subdomain that belong to a same end-to-end subnet, so that resources in different subdomains can be managed through collaboration in the end-to-end subnet, thereby increasing system efficiency of communication of the end-to-end subnet and improving end-to-end service experience consistency.

Referring to the method 400, as shown in FIG. 3, from a perspective of performing network slice mapping between a RAN subdomain and a TN subdomain, an embodiment of this application further provides a communication method 500. The method 500 includes the following operations.

Operation 501: Initial access request and/or service request.

In this operation, a terminal device initiates the initial access request and/or the service request. The initial access request and/or the service request carry or carries a parameter used to select a network slice, and the initial access request and/or the service request may be sent by the UE to a CN by using a NAS message.

Operation 502: Establish a data flow connection.

In this operation, the CN establishes the data flow connection (the data flow connection may be a session connection, a QoS flow, a plurality of QoS flows, an IP data flow, or a plurality of IP data flows) for the UE, and associates the data flow connection with a subnet. The subnet herein may be an end-to-end subnet configured by a network manager or a CN domain subnet. If the subnet is a CN domain subnet, there is a correspondence between the CN domain subnet and an end-to-end subnet, and the subnet has information about an identifier of the subnet. The CN may further allocate a data transmission channel between the core network and a RAN to the data flow connection, and the CN notifies the UE of at least one of information about an identifier of the data flow connection, information about an identifier of a corresponding subnet (for example, at least one of information about an identifier of the end-to-end subnet, the information about the identifier of the CN subnet, and information about an identifier that is of a subnet and that is authenticated by the CN), information about the data transmission channel, and QoS related information.

Operation 503: Learn of a correspondence between a data flow and a subnet.

In this operation, the RAN learns of at least one of the information about the identifier of the subnet, the information about the identifier of the data flow connection, and the information about the corresponding transmission channel, so that a data packet can be correctly added to a corresponding TN subnet for transmission.

In operation 503, the RAN may learn of at least one of the information about the identifier of the subnet, the information about the identifier of the data flow connection, and the information about the corresponding transmission channel in either of the following manners:
Optional manner 1: In operation 501, the CN exchanges information through a RAN-CN interface, and transmits related information to a radio access network device, for example, a base station, on a RAN side by using information exchanged through the interface.

Optional manner 2: In operation 502, the RAN exchanges information through a RAN-CN interface, and obtains the information about the identifier of the data flow connection and the information about the corresponding transmission channel by using an interface message. After learning of the information about the identifier of the subnet and the information about the identifier of the data flow connection, the UE adds the information about the identifier of the subnet and the information about the identifier of the data flow connection to an interface message between the UE and the RAN, to notify a base station on a RAN side, so that the RAN learns of the information about the subnet corresponding to the data flow connection (for example, at least one of the information about the identifier of the end-to-end subnet, the information about the identifier of the CN subdomain subnet, and the information about the identifier that is of the subnet and that is authenticated by the CN).

Operation 504: Perform end-to-end subnet transmission.

Based on the information that is about the identifier of the subnet and that is obtained in operation 503, in this operation, the RAN associates the data flow connection with a RAN subdomain subnet, and allocates a corresponding air interface transmission resource (for example, a DRB) to the data flow connection. The CN and the RAN learn of, through a management plane interface, information about a TN subnet corresponding to the subnet (for example, for a manner of learning of the information about the TN subnet, refer to the operations 403, 404, and 405 in the method 400), so that user data can be transmitted in the corresponding TN subnet.

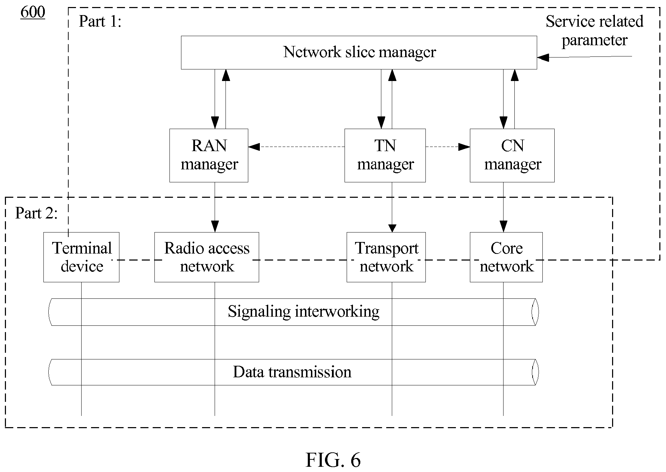

Referring to the method 200, the method 300, the method 400, and the method 500, this application provides a communications system, namely, a system 600 shown in FIG. 6. Based on the system 600, two parts are described in the embodiments. From a perspective of a management plane signaling procedure in the system 600, in a first part (a part 1 shown in the figure), a case in which a network manager and each subdomain manager perform parameter configuration and collaboration is mainly described. In a second part (a part 2 shown in the figure), a signaling procedure for a RAN and a CN in the system is mainly described, so that user data belonging to a same end-to-end subnet can be added, in a RAN subdomain, a CN subdomain, and a TN subdomain, to a subdomain subnet belonging to the end-to-end subnet. The management plane signaling procedure in the part 1 may be designed as an independent system management plane procedure, to complete related signaling configuration on a management plane, or may be used as a shared part of solutions in the embodiments of this application, for example, a shared part of solutions in the part 2. In the part 2, for different design schemes that are used for a network slice and that are configured by the core network, corresponding processing may be different on a RAN side. FIG. 6 shows only the part 1 and the part 2 in the system 600, but does not further show various possible procedure designs of each of the part 1 and the part 2. Detailed descriptions are provided below one by one. It may be understood that in the part 1 in a dashed-line box in the system 600, an information exchange interface may be disposed between any two of the network manager, a RAN manager, a TN manager, and a CN manager. However, it should be understood that specific management plane signaling interworking procedures of the network manager, the RAN manager, the TN manager, and the CN manager may be implemented in various manners, provided that information about subnets of the RAN subdomain, the TN subdomain, the CN subdomain, and the like can be transmitted between any two of the network manager, the RAN manager, the TN manager, and the CN manager. The information that needs to be transmitted includes but is not limited to any one or more of the following: information about an identifier of at least one subdomain subnet, information about a correspondence/mapping relationship between any two subdomain subnets, information about a correspondence/mapping relationship between each subdomain subnet and an end-to-end network subnet created by the system, and at least one type of the following information that may be used in slice management and slice mapping: a UE ID, a session ID, a tunnel ID, information about an identifier of a subnet, a core network user plane IP address, information about an identifier of a QoS flow, an identifier of a DRB, information about an identifier of an IP data flow, and the like. The part 2 in FIG. 6 currently shows a general procedure of data transmission in subdomains that is performed through signaling interworking between a terminal device, a radio access device, a transport network, and the core network. Further, there is a signaling interface between the RAN manager and the radio access network, there is a signaling interface between the TN manager and a transport network device, and there is a signaling interface between the CN manager and the core network. Each of these signaling interfaces can be used to exchange the information that needs to be transmitted.

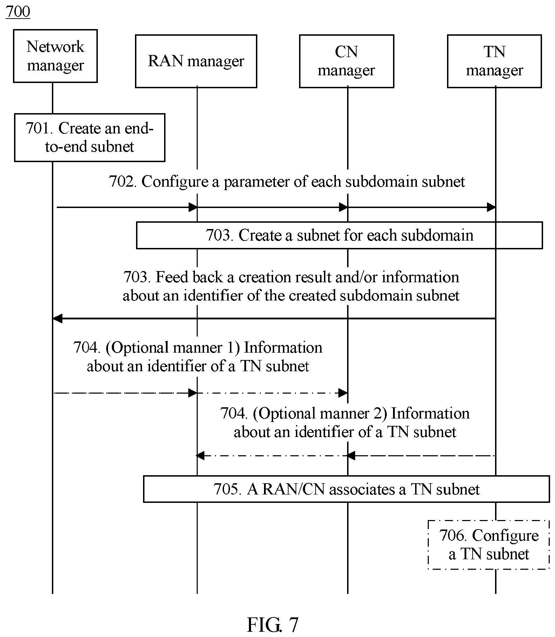

For the part 1 in the system 600, a specific signaling procedure may be designed in a plurality of following optional implementations:
As shown in FIG. 7, an optional manner 1 of the part 1 provides a communication method 700.

An implementation process based on the method 700 includes the following operations.

Operation 701: Create an end-to-end subnet.

A network manager creates the end-to-end subnet based on an input parameter such as a quality of service (quality of service, QoS) parameter (a quality of service requirement of a customer for a service type) related to a service level agreement (service level agreement, SLA), and configures a configuration parameter of each subdomain based on a capability requirement of the end-to-end subnet. The configuration parameter may include a specific configuration of each subdomain, for example, at least one of a resource usage manner, a resource usage policy, and a resource usage limitation. The configuration parameter may further include a key performance counter requirement for each subdomain (a specific parameter may be flexibly configured for each subdomain provided that the parameter configured for each subdomain meets the counter requirement).

Operation 702: Configure a parameter of each subdomain subnet.

The network manager sends an involved configuration parameter of each subdomain to each subdomain manager. In this operation, the network manager may also send information about an identifier of the end-to-end subnet to each subdomain manager. The information about the identifier of the subnet may include any one or any combination of the following parameters: network slice selection assistance information (network slice selection assistance information, NSSAI), a slice type identifier (slice type ID), service management NSSAI (session management NSSAI, SM-NSSAI), single NSSAI (single NSSAI), a service type identifier (service type ID), a service type identifier of a subdomain, a tenant identifier (tenant ID), a user group identifier (user group ID), an index value (slice index) used to represent a slice type or a slice identifier, the identifier of the end-to-end subnet (subnet work ID), and information about an identifier of a subdomain subnet (for example, at least one of an identifier of a RAN subnet, an identifier of a CN subnet, and an identifier of a TN subnet).

Optionally, a configuration parameter that is sent by the network manager to a RAN manager and that is used for a RAN subdomain may include information about an identifier of a corresponding TN subnet and/or a correspondence between a RAN subdomain subnet and a TN subnet.

Optionally, a configuration parameter that is sent by the network manager to a CN manager and that is used for a CN subdomain includes information about an identifier of a corresponding TN subnet and/or a correspondence between a RAN subdomain subnet and a TN subnet.

Operation 703: Create a subnet for each subdomain, and feed back, for the subdomain, a creation result and/or information about an identifier of the subdomain subnet created for the subdomain to the network manager.

In this operation, after each involved subdomain manager receives configuration information related to creation of the end-to-end subnet from the network manager, each subdomain manager creates a subnet corresponding to the subdomain, and then feeds back information about an identifier of the subdomain subnet created by the subdomain manager to the network manager, for example, feeds back the information about the identifier by sending a response message. The configuration information related to creation of the end-to-end subnet may be various types of information delivered by the manager to each subdomain manager in operation 702; or the configuration information may be sent by the network manager to a subdomain manager and then forwarded by the subdomain manager to another involved subdomain manager through an interconnection interface. A response message returned by a TN manager to the network manager may include at least one or any combination of the following: information about an identifier of a TN subnet created by the TN manager for a RAN/CN, information about an identifier of a TN subnet created by the TN manager for a RAN-CN interface, and information about an identifier of a global TN subnet created by the TN manager without distinguishing between the CN, the RAN, and the RAN-CN interface. Optionally, the TN subnet created by the TN manager may be used to distinguish between a control plane transmission bearer and a user plane transmission bearer. In other words, the TN manager may further create different TN subnets for transmitting a control plane data packet and a user plane data packet. Optionally, the TN subnet created by the TN manager may be used to distinguish between data flows in a subnet. For example, TN subnets are created for an IP data flow, a plurality of IP data flows, a QoS flow, and a plurality of QoS flows. The information about the identifier of the TN subnet may be fed back to the network manager. For example, the information about the identifier of the TN subnet is also included in the foregoing response message. Correspondingly, information about an identifier of an end-to-end subnet corresponding to the TN subnet may also be carried in the response message. The response message in this embodiment is a message that can carry the foregoing various types of configuration information. A specific name is not limited, and the response message may have another message name. In this operation, the information about the identifier of the TN subnet may be expressed differently based on different manners of creating a TN subnet (a TN domain subnet corresponding to an end-to-end subnet). For example, if a network slice manner of a TN domain is creating a virtual local area network (virtual local area network, VLAN), the identifier of the TN subnet may be a VLAN ID; or if a network slice manner of a TN domain is another method and technology for creating a virtual subnet, the identifier of the TN subnet is a corresponding identifier that can be used to distinguish between virtual subnets. This is not limited herein.

Optionally, if a plurality of TN subnets are created by a TN, the information about the identifier of the TN subnet includes information, for example, a port number or an IP address, used to distinguish between different TN subnets.

Optionally, if the TN subnet may be used to distinguish between bearer signaling plane transmission and data plane transmission, the information about the identifier of the TN subnet may include information used to distinguish between signaling plane transmission and data plane transmission, so that different subnets for bearer signaling plane transmission and data plane transmission can be distinguished.

Optionally, if the TN subnet may be used to distinguish between different data flows in a same subnet, the information about the identifier of the TN subnet may include information used to distinguish between different data flows, for example, information about an identifier of an IP data flow, information about a group identifier of a plurality of IP data flows, information about an identifier of a QoS flow, and information about a group identifier of a plurality of QoS flows. Operation 704: Notify the RAN/CN manager of the information about the identifier of the TN subnet.

Optional implementation 1 of operation 704: The network manager sends the information about the identifier of the TN subnet configured by the TN manager to the RAN/CN manager by using an interface message. The information about the identifier of the TN subnet may be obtained by the network manager in operation 703. The interface message may further carry the information about the identifier of the end-to-end subnet corresponding to the information about the identifier of the TN subnet. Optionally, if the TN manager creates a plurality of TN subnets for a same end-to-end subnet, the information about the identifier of the TN subnet further needs to include a parameter used to distinguish between the TN subnets in the same end-to-end subnet.

Optional implementation 2 of operation 704: The TN manager may send an interface message through an interface between the TN manager and the RAN/CN manager. The interface message carries the information about the identifier of the TN subnet configured for the RAN/CN, so that the information about the identifier of the TN subnet configured by the TN for the RAN/CN can be sent to the RAN/CN manager. The TN manager may further add, to the interface message, the information about the identifier of the end-to-end subnet corresponding to the information about the identifier of the TN subnet. Optionally, if the TN manager creates a plurality of TN subnets for a same end-to-end subnet, the information about the identifier of the TN subnet further needs to include a parameter used to distinguish between the TN subnets in the same end-to-end subnet.

Operation 705: The RAN/CN associates a TN subnet.

The RAN/CN associates a RAN/CN subdomain subnet created by the RAN/CN for the end-to-end subnet with a corresponding TN subnet based on obtained information about an identifier of a subnet (for example, information obtained in operation 702 and/or operation 704), so that the RAN/CN and the TN correspond to the same end-to-end subnet.

Operation 706: The TN manager configures a TN parameter for an involved TN subnet.

The TN manager configures the corresponding TN parameter for the involved corresponding TN subnet based on a requirement of the end-to-end subnet for the TN domain. The TN parameter may include at least one of the following: a configuration of a topology table, a configuration of a routing table, and a mapping relationship between a forwarding priority and an intra-RAN/CN parameter/RAN-CN interface parameter. The mapping relationship may include a mapping relationship between a forwarding priority of a VLAN and an intra-RAN/CN data packet QoS parameter/RAN-CN interface data packet QoS parameter (at least one of the intra-RAN data packet QoS parameter, the intra-CN data packet QoS parameter, and the RAN-CN interface data packet QoS parameter), and/or a mapping relationship between a forwarding priority of a VLAN and an IP-bearer differentiated services code point (differentiated services code point, DSCP) of an intra-RAN/CN data packet/RAN-CN interface data packet (at least one of the intra-RAN data packet, the intra-CN data packet, and the RAN-CN interface data packet). Optionally, the TN manager sends a parameter configuration of the TN subnet to a corresponding TN domain node. Optionally, an action of performing configuration for the TN subnet in operation 706 may be performed at any time after operation 702 in the method 700.

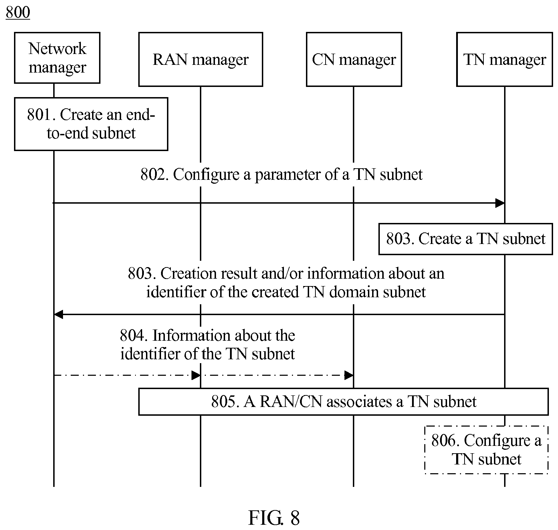

It should be noted that some operations such as operation 706 in the method may be omitted. Referring to the system 600, as shown in FIG. 8, an optional manner 2 of the part 1 provides a communication method 800. An implementation process based on the method 800 includes the following operations.

Operation 801: Create an end-to-end subnet and determine a configuration parameter of each subdomain.

Operation 801 is similar to operation 701, and therefore details are not described herein again. Operation 802: Configure a parameter of a TN subnet.

A network manager sends a configuration parameter of a TN domain to a TN manager. In this operation, the network manager may also send information about an identifier of the end-to-end subnet to the TN domain manager. The information about the identifier of the subnet may include any one or any combination of the following parameters: network slice selection assistance information (network slice selection assistance information, NSSAI), a slice type identifier (slice type ID), service management NSSAI (session management NSSAI, SM-NSSAI), single NSSAI (single NSSAI), a service type identifier (service type ID), a service type identifier of a subdomain, a tenant identifier (tenant ID), a user group identifier (user group ID), an index value (slice index) used to represent a slice type or a slice identifier, the identifier of the end-to-end subnet (subnet work ID), and information about an identifier of a subdomain subnet (for example, at least one of an identifier of a RAN subnet, an identifier of a CN subnet, and an identifier of a TN subnet).

Operation 803: Create a TN subdomain subnet, and feed back a creation result and/or information about an identifier of the created TN domain subnet to the network manager.

In operation 803, after the TN subdomain manager receives configuration information related to creation of the end-to-end subnet from the network manager, the TN manager creates the TN subdomain subnet, and then feeds back information about an identifier of the subdomain subnet created by the TN manager to the network manager, for example, feeds back the information about the identifier by sending a response message. The response message sent by the TN manager to the network manager may include at least one or any combination of the following: information about an identifier of a TN subnet created by the TN manager for a RAN/CN, information about an identifier of a TN subnet created by the TN manager for a RAN-CN interface, and information about an identifier of a global TN subnet created by the TN manager without distinguishing between the CN, the RAN, and the RAN-CN interface. Optionally, the TN subnet created by the TN manager may be used to distinguish between a control plane transmission bearer and a user plane transmission bearer. In other words, the manager may further create different TN subnets for transmitting a control plane data packet and a user plane data packet. Further optionally, the TN subnet created by the TN manager may be used to distinguish between data flows in a subnet. For example, TN subnets are created for an IP data flow, a plurality of IP data flows, a QoS flow, and a plurality of QoS flows. The information about the identifier of the TN subnet may be fed back to the network manager. For example, the information about the identifier of the TN subnet is also included in the foregoing response message and fed back. Correspondingly, information about an identifier of an end-to-end subnet corresponding to the TN subnet may also be carried in the response message. The response message in this embodiment is a message that can carry the foregoing various types of configuration information. A specific name is not limited, and the response message may have another message name. In this operation, the information about the identifier of the TN subnet may be expressed differently based on different manners of creating a TN subnet (a TN domain subnet corresponding to an end-to-end subnet). For example, if a network slice manner of the TN domain is creating a virtual local area network (virtual local area network, VLAN), the identifier of the TN subnet may be a VLAN ID; or if a network slice manner of the TN domain is another method and technology for creating a virtual subnet, the identifier of the TN subnet is a corresponding identifier that can be used to distinguish between virtual subnets. This is not limited herein.

In operation 803, optionally, if a plurality of TN subnets are created by a TN, the information about the identifier of the TN subnet includes information, for example, a port number or an IP address, used to distinguish between different TN subnets. Optionally, if the TN subnet may be used to distinguish between bearer signaling plane transmission and data plane transmission, the information about the identifier of the TN subnet may include information used to distinguish between signaling plane transmission and data plane transmission, so that different subnets for bearer signaling plane transmission and data plane transmission can be distinguished. Optionally, if the TN subnet may be used to distinguish between different data flows in a same subnet, the information about the identifier of the TN subnet may include information used to distinguish between different data flows, for example, information about an identifier of an IP data flow, information about a group identifier of a plurality of IP data flows, information about an identifier of a QoS flow, and information about a group identifier of a plurality of QoS flows. Operation 804: Notify a RAN/CN manager of the information about the identifier of the TN subnet.

Optionally, in operation 804, the network manager sends, to the RAN manager by using an interface message between the network manager and the RAN manager, a configuration parameter of a RAN subdomain corresponding to the end-to-end subnet and/or information about an identifier of a TN subnet configured by the TN manager for the RAN. The interface message may further carry a RAN subdomain configuration and/or the information about the identifier of the end-to-end subnet corresponding to the identifier of the TN subnet.

Optionally, in operation 804, the network manager sends, to the CN manager by using an interface message between the network manager and the CN manager, a configuration parameter of a CN subdomain corresponding to the information about the identifier of the end-to-end subnet and/or information about an identifier of a TN subnet configured by the TN manager for the CN. The interface message may further carry configuration information of the CN subdomain and/or the information about the identifier of the end-to-end subnet corresponding to the TN subnet.

Operation 805: The RAN/CN associates a TN subnet.

The RAN/CN associates a RAN/CN subdomain subnet created by the RAN/CN for the end-to-end subnet with a corresponding TN subnet based on obtained information about an identifier of a subnet (for example, information obtained in operation 804), so that the RAN/CN and the TN correspond to the same end-to-end subnet.

Operation 806: The TN manager configures a TN parameter for a TN subnet.

The TN manager configures the corresponding TN parameter for the involved corresponding TN subnet based on a requirement of the end-to-end subnet for the TN subdomain. The TN parameter may include at least one of the following: a configuration of a topology table, a configuration of a routing table, and a mapping relationship between a forwarding priority and an intra-RAN/CN parameter/RAN-CN interface parameter. The mapping relationship may include a mapping relationship between a forwarding priority of a VLAN and an intra-RAN/CN data packet QoS parameter/RAN-CN interface data packet QoS parameter (at least one of the intra-RAN data packet QoS parameter, the intra-CN data packet QoS parameter, and the RAN-CN interface data packet QoS parameter), and/or a mapping relationship between a forwarding priority of a VLAN and an IP-bearer differentiated services code point (differentiated services code point, DSCP) of an intra-RAN/CN data packet/RAN-CN interface data packet (at least one of the intra-RAN data packet, the intra-CN data packet, and the RAN-CN interface data packet). An action of performing configuration for the TN subnet in operation 806 may be performed at any time after operation 802 in the method 800.

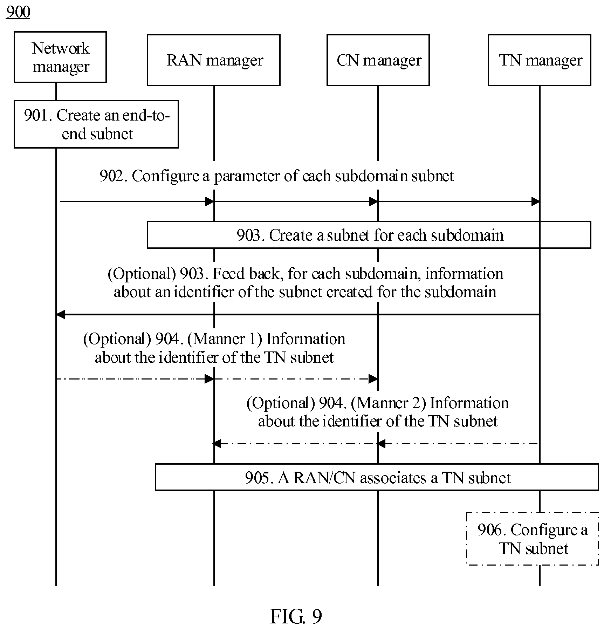

It should be noted that some operations such as operation 806 in the method may be omitted. Referring to the system 600, as shown in FIG. 9, an optional manner 3 of the part 1 provides a communication method 900. An implementation process based on the method 900 includes the following operations.

Operation 901: Create an end-to-end subnet.

A network manager creates the end-to-end subnet based on an input parameter (for example, a parameter related to a quality of service requirement of a customer for a service type), and configures a configuration parameter of each subdomain based on a capability requirement of the end-to-end subnet. The configuration parameter may be a specific configuration of each subdomain, for example, a resource usage manner, a resource usage policy, and a resource usage limitation. The configuration parameter may further include a key performance counter requirement for each subdomain (a specific parameter may be flexibly configured for each subdomain provided that the parameter configured for each subdomain meets the counter requirement). Operation 901 is similar to operation 701 in the method 700 or operation 801 in the method 800.

In a possible design, a configuration parameter of a TN subdomain may include at least any one or more of the following information: information about an identifier of a TN subnet configured for a RAN domain/CN domain in the end-to-end network subnet, information about an identifier of a TN subnet created for a RAN-CN interface, and information about an identifier of a global TN subnet created without distinguishing between a CN, a RAN, and the RAN-CN interface. Optionally, the configuration parameter of the TN subdomain may further include a TN parameter configured for each TN subnet. The TN parameter may include at least one of the following: a configuration of a topology table, a configuration of a routing table, and a mapping relationship between a forwarding priority and an intra-RAN/CN parameter/RAN-CN interface parameter. The mapping relationship may include a mapping relationship between a forwarding priority of a VLAN and an intra-RAN/CN data packet QoS parameter/RAN-CN interface data packet QoS parameter (at least one of the intra-RAN data packet QoS parameter, the intra-CN data packet QoS parameter, and the RAN-CN interface data packet QoS parameter), and/or a mapping relationship between a forwarding priority of a VLAN and an IP-bearer differentiated services code point (differentiated services code point, DSCP) of an intra-RAN/CN data packet/RAN-CN interface data packet (at least one of the intra-RAN data packet, the intra-CN data packet, and the RAN-CN interface data packet).

Optionally, the information about the identifier of the TN subnet may be expressed differently based on different manners of creating a TN subnet (a TN domain subnet corresponding to an end-to-end subnet). For example, if a subnet creation manner of the TN domain is creating a virtual local area network (virtual local area network, VLAN), the information about the identifier of the TN subnet is a VLAN ID; or if a subnet creation manner of the TN domain is another method and technology for creating a virtual subnet, the information about the identifier of the TN subnet is a corresponding identifier that can be used to distinguish between virtual subnets. This is not limited herein.

Optionally, if a plurality of TN subnets are created by a TN, the information about the identifier of the TN subnet includes information, for example, a port number or an IP address, used to distinguish between different TN subnets.

Optionally, if the TN subnet may be used to distinguish between bearer signaling plane transmission and data plane transmission, the information about the identifier of the TN subnet may include information used to distinguish between signaling plane transmission and data plane transmission, so that different subnets for bearer signaling plane transmission and data plane transmission can be distinguished.

Optionally, if the TN subnet may be used to distinguish between different data flows in a same subnet, the information about the identifier of the TN subnet may include information used to distinguish between different data flows, for example, information about an identifier of an IP data flow, information about a group identifier of a plurality of IP data flows, information about an identifier of a QoS flow, and information about a group identifier of a plurality of QoS flows. Operation 902: Configure a parameter of each subdomain subnet.

The network manager sends an involved configuration parameter of each subdomain to each subdomain manager by using an interface message. Optionally, the interface message may further carry information about an identifier of the end-to-end subnet.

Optionally, the information about the identifier of the subnet may include any one or any combination of the following parameters: network slice selection assistance information (network slice selection assistance information, NSSAI), a slice type identifier (slice type ID), service management NSSAI (session management NSSAI, SM-NSSAI), single NSSAI (single NSSAI), a service type identifier (service type ID), a service type identifier of a subdomain, a tenant identifier (tenant ID), a user group identifier (user group ID), an index value (slice index) used to represent a slice type or a slice identifier, the identifier of the end-to-end subnet (subnet work ID), and information about an identifier of a subdomain subnet (for example, at least one of an identifier of a RAN subnet, an identifier of a CN subnet, and an identifier of a TN subnet). Optionally, a configuration parameter that is sent by the network manager to a RAN manager and that is used for the RAN subdomain may include information about an identifier of a corresponding TN subnet and/or a correspondence between a RAN subdomain subnet and a TN subnet.

Optionally, a configuration parameter that is sent by the network manager to a CN manager and that is used for the CN subdomain includes information about an identifier of a corresponding TN subnet and/or a correspondence between a RAN subdomain subnet and a TN subnet. Optionally, the configuration parameter that is sent by the network manager to the TN manager and that is used for the TN subdomain includes information about an identifier of a TN subnet created for the end-to-end subnet (optionally, may correspond to a configured intra-RAN/CN TN subnet/RAN-CN interface TN subnet) and/or a configuration parameter required for each involved TN subnet.

(Optional) Operation 903: Create a subnet for each subdomain, and feed back, for the subdomain, information about an identifier of the subdomain subnet created for the subdomain to the network manager.

In this operation, after each involved subdomain manager receives configuration information related to creation of the end-to-end subnet from the network manager, each subdomain manager creates a subnet corresponding to the subdomain, and then feeds back information about an identifier of the subdomain subnet created by the subdomain manager to the network manager, for example, feeds back the information about the identifier by sending a response message. The configuration information related to creation of the end-to-end subnet may be various types of configuration information that is determined by the manager in operation 902 and that is related to each subdomain manager; or the configuration information may be sent by the network manager to a subdomain manager and then forwarded by the subdomain manager to another involved subdomain manager through an interconnection interface. Operation 903 may be similar to operation 703 in the method 700.

(Optional) Operation 904: Notify the RAN/CN manager of the information about the identifier of the TN subnet.

Optional implementation 1 of operation 904: The network manager sends the information about the identifier of the TN subnet configured by the TN manager to the RAN/CN manager by using an interface message. The information about the identifier of the TN subnet may be obtained by the network manager in operation 903. The interface message may further carry the information about the identifier of the end-to-end subnet corresponding to the information about the identifier of the TN subnet. Optionally, if the TN manager creates a plurality of TN subnets for a same end-to-end subnet, the information about the identifier of the TN subnet further needs to include a parameter used to distinguish between the TN subnets in the same end-to-end subnet.

Optional implementation 2 of operation 904: The TN manager may send an interface message through an interface between the TN manager and the RAN/CN manager. The interface message carries the information about the identifier of the TN subnet configured for the RAN/CN, so that the information about the identifier of the TN subnet configured by the TN for the RAN/CN can be sent to the RAN/CN manager. The TN manager may further add, to the interface message, the information about the identifier of the end-to-end subnet corresponding to the information about the identifier of the TN subnet. Optionally, if the TN manager creates a plurality of TN subnets for a same end-to-end subnet, the information about the identifier of the TN subnet further needs to include a parameter used to distinguish between the TN subnets in the same end-to-end subnet. Operation 904 may be similar to operation 704 in the method 700.

Operation 905: The RAN/CN associates a TN subnet.

The RAN subdomain/CN subdomain may associate a RAN/CN part created by the RAN subdomain/CN subdomain for the end-to-end subnet with a TN subnet based on information that is about an identifier of a subnet and that is obtained in operation 902, so that a RAN subdomain subnet/CN subdomain subnet and the TN subnet can correspond to the same end-to-end network subnet. The information about the identifier of the subnet may include any one or any combination of the following parameters: network slice selection assistance information (network slice selection assistance information, NSSAI), a slice type identifier (slice type ID), service management NSSAI (session management NSSAI, SM-NSSAI), single NSSAI (single NSSAI), a service type identifier (service type ID), a service type identifier of a subdomain, a tenant identifier (tenant ID), a user group identifier (user group ID), an index value (slice index) used to represent a slice type or a slice identifier, the identifier of the end-to-end subnet (subnet work ID), and information about an identifier of a subdomain subnet (for example, at least one of an identifier of a RAN subnet, an identifier of a CN subnet, and an identifier of a TN subnet). Optionally, the RAN subdomain/CN subdomain may associate a RAN/CN subnet created by the RAN subdomain/CN subdomain for the end-to-end subnet with a corresponding TN subnet based on related information obtained in operation 904, so that the RAN subdomain subnet/CN subdomain subnet and the TN subnet can correspond to the same end-to-end network subnet, and data can be transmitted between the RAN, the TN, and the CN.

Operation 906: Correspondingly configure a TN domain node.

In this operation, the TN manager sends a TN subnet parameter to a corresponding TN domain device.

Optionally, the TN manager configures a corresponding TN parameter for an involved corresponding TN subnet based on a requirement of the end-to-end subnet for the TN domain. The TN parameter may include at least one of the following: a configuration of a topology table, a configuration of a routing table, and a mapping relationship between a forwarding priority and an intra-RAN/CN parameter/RAN-CN interface parameter. The mapping relationship may include a mapping relationship between a forwarding priority of a VLAN and an intra-RAN/CN data packet QoS parameter/RAN-CN interface data packet QoS parameter (at least one of the intra-RAN data packet QoS parameter, the intra-CN data packet QoS parameter, and the RAN-CN interface data packet QoS parameter), and/or a mapping relationship between a forwarding priority of a VLAN and an IP-bearer differentiated services code point (differentiated services code point, DSCP) of an intra-RAN/CN data packet/RAN-CN interface data packet (at least one of the intra-RAN data packet, the intra-CN data packet, and the RAN-CN interface data packet). Optionally, an action of performing configuration for the TN subnet in operation 906 may be performed at any time after operation 902 in the method 900.

It should be noted that some operations such as operation 906 in the method may be omitted.

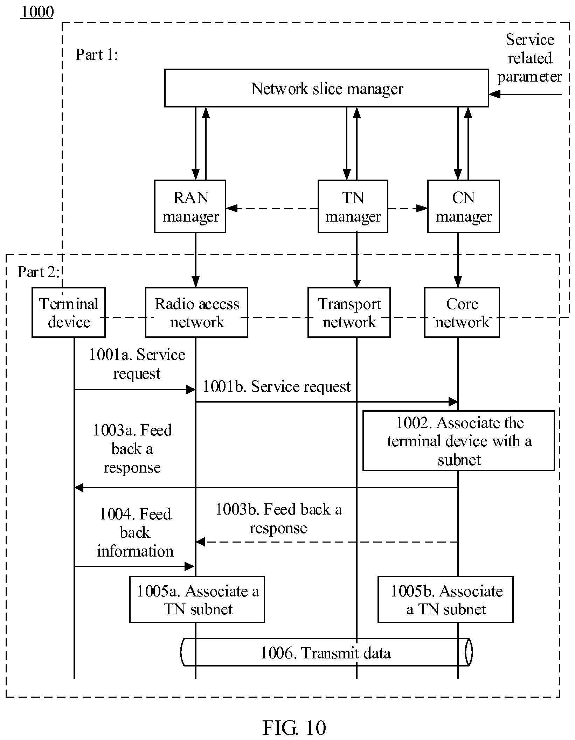

Based on any one of the foregoing management plane signaling configuration procedures (for example, the method 700, the method 800, and the method 900) in the part 1 in the system 600, an embodiment of the present invention provides a communication method and a system 1000. One of key points of the method may be described as follows: A core network device identifies, by using information about an identifier of a session connection between a RAN and a CN, a subnet to which data transmitted between the RAN and the CN belongs. For example, a radio access network device may obtain a correspondence between a subnet, a tunnel ID, and a transport network subnet (for example, a VLAN), and/or the core network device establishes a correspondence between a subnet, a tunnel ID, and a transport network subnet (for example, a VLAN). As shown in FIG. 10, an implementation process of the method 1000 includes the following operations.

Operation 1001: A terminal device initiates a service request.

In operation 1001, for example, the terminal device is UE. As shown in 1001a in FIG. 10, the UE sends the service request to the RAN. In 1001b, the RAN forwards the service request to the core network; or the RAN extracts content from the service request, and then sends the content in the service request to the core network by using a signaling message between the RAN and the core network.

In operation 1001, the service request includes reference information used to assist in network slice selection. The reference information may be any one or any combination of the following parameters: (1) information about an identifier of the UE, where the information about the identifier of the UE may include an international mobile subscriber identity (international mobile subscriber identifier, IMSI), a temporary mobile subscriber identity (temporary mobile subscriber identity, TMSI), or a temporary UE identifier (temp UE ID), (2) network slice selection assistance information (network slice selection assistance information, NSSAI), (3) a slice type identifier (slice type ID), (4) service management NSSAI (session management NSSAI, SM-NSSAI), (5) a service type identifier (service type ID) of a subdomain, (6) a tenant identifier (tenant ID), (7) a user group identifier (user group ID), (8) single NSSAI (single NSSAI), (9) an index value (slice index) used to represent a slice type or a slice identifier, (10) an identifier of an end-to-end subnet (subnet work ID), and (11) information about an identifier of a subdomain subnet (for example, at least one of an identifier of a RAN subnet, an identifier of a CN subnet, and an identifier of a TN subnet).

Operation 1002: Associate the terminal device with a slice.

After receiving the service request in operation 1001, the core network device associates the UE with a slice, and/or selects a corresponding core network function entity for the UE, for example, selects a core network access and mobility management function entity, a session management function entity, and a user plane function entity. The session management function entity is responsible for creating a session and selecting a corresponding user plane function entity.

Operation 1003: Feed back a response.

In this operation, as shown in 1003a, the CN device feeds back response information to the UE. The response information may be sent in the following manner: The CN directly forwards the response information to the UE by using the RAN; or after the CN sends the response information to the RAN, the RAN obtains content in the response information, and then sends the content in the response information to the UE by using an air interface message between the RAN and the UE. The response information in this step may include information about an identifier of a subnet that the CN associates with the UE and/or a session ID, and the like. Optionally (represented by a dashed line and an arrow), in operation 1003, as shown in 1003b, the CN may send any one or more of the information about the identifier of the subnet that the CN associates with the UE, and/or a core network user plane IP address, a session ID, a tunnel ID (uplink and/or downlink), and the like to the RAN by using the response information in 1003a or an interface message between the RAN and the CN. If information is transmitted by using different messages in 1003a and 1003b, a time sequence of the actions 1003a and 1003b is not limited herein.

In 1003a and/or 1003b, the information about the identifier of the subnet may include any one or any combination of the following parameters: network slice selection assistance information (network slice selection assistance information, NSSAI), a slice type identifier (slice type ID), service management NSSAI (session management NSSAI, SM-NSSAI), single NSSAI (single NSSAI), a service type identifier (service type ID), a service type identifier of a subdomain, a tenant identifier (tenant ID), a user group identifier (user group ID), an index value (slice index) used to represent a slice type or a slice identifier, an identifier of an end-to-end subnet (subnet work ID), and information about an identifier of a subdomain subnet (for example, at least one of an identifier of a RAN subnet, an identifier of a CN subnet, and an identifier of a TN subnet).

(Optional) Operation 1004: Feed back information.

In an optional design, after the UE receives the response information fed back by the CN in operation 1003, the UE may send any one or more of the information about the identifier of the subnet that the CN associates with the UE, and/or the core network user plane IP address, the session ID, the tunnel ID (uplink and/or downlink), and the like to the RAN device by using an air interface signaling message such as a Uu interface message. The information about the identifier of the subnet may include any one or any combination of the following parameters: network slice selection assistance information (network slice selection assistance information, NSSAI), a slice type identifier (slice type ID), service management NSSAI (session management NSSAI, SM-NSSAI), single NSSAI (single NSSAI), a service type identifier (service type ID), a service type identifier of a subdomain, a tenant identifier (tenant ID), a user group identifier (user group ID), an index value (slice index) used to represent a slice type or a slice identifier, an identifier of an end-to-end subnet (subnet work ID), and information about an identifier of a subdomain subnet (for example, at least one of an identifier of a RAN subnet, an identifier of a CN subnet, and an identifier of a TN subnet).

Operation 1005: Associate a TN subnet.

In operation 1005, on a RAN side, as shown in 1005a, an optional design in which the radio access network device associates a RAN subdomain subnet (or data) with a TN subdomain subnet is as follows: The radio access network device associates a TN subnet with an end-to-end subnet created by a system and a corresponding RAN subnet based on the information that is about the identifier of the subnet and that is reported by the UE (for example, in operation 1004) or provided by the CN (for example, in operation 1003b or 1003a). The radio access network device obtains a mapping relationship between information about a RAN subnet, information about an identifier of a session connection, tunnel establishment related information, information about an identifier of a TN subnet, and the like based on information (for example, a VLAN ID) that is about an identifier of a TN subnet and that is obtained by the RAN. For example, the mapping relationship is specifically represented as (information about an identifier of a subnet, information about an identifier of a session connection, tunnel establishment related information, information (for example, a VLAN ID) about an identifier of a TN subnet). For example, the identifier of the session connection may be an identifier of a packet data connection, the tunnel establishment related information may be a GPRS tunneling protocol-user plane tunnel endpoint identifier (GPRS Tunneling Protocol-User Plane tunnel endpoint identifier, GTP-U TEID) and/or an IP address, and the VLAN ID is a VLAN identifier of a TN subnet associated with the RAN side, or the information about the identifier of the TN subnet may include a network slice instance identifier on a side (TN slice instance ID).

A solution design in which the RAN obtains the information about the identifier of the TN subnet is as follows: The radio access network device may obtain the information about the identifier of the TN subnet through various feasible management plane signaling procedures in the part 1 in this application.

In operation 1005, on a CN side, as shown in 1005b, an optional design in which the core network device associates a CN subdomain subnet (or data) with a TN subdomain subnet is as follows: The core network device obtains information about an identifier of a subnet based on the network slice selection assistance information included in the service request reported by the UE (for example, in operation 1001a and/or 1001b), and obtains a mapping relationship between information about an identifier of a CN subnet, information about an identifier of a session connection, tunnel establishment related information, information about an identifier of a TN subnet, and the like based on information (for example, a VLAN ID) that is about an identifier of a TN subnet and that is obtained by the CN. For example, the mapping relationship is specifically represented as (information about an identifier of a subnet, information about an identifier of a session connection, tunnel establishment related information, information (for example, a VLAN ID) about an identifier of a TN subnet). For example, the identifier of the session connection may be an identifier of a packet data connection, the tunnel establishment related information may be a GTP-U TEID and/or an IP address, and the VLAN ID is a VLAN identifier of a TN subnet associated with the CN side, or the information about the identifier of the TN subnet may include a network slice instance identifier on a side (TN slice instance ID).

A solution design in which the CN device obtains the information about the identifier of the TN subnet is as follows: The CN may obtain the information about the identifier of the TN subnet through various feasible management plane signaling procedures in the part 1 in this application. Through 1005a and 1005b, a correspondence between a RAN subdomain subnet, a CN subdomain subnet, and a TN subdomain subnet that belong to a same end-to-end subnet can be established, subnet-based uplink/downlink data transmission is performed through collaboration between subdomains, and end-to-end transmission performance is enhanced.

Operation 1006: Transmit data.

For data transmission between the RAN and the CN, for a session connection of the UE, the RAN side device establishes an association relationship between any two or all of information about an identifier of a session connection, tunnel identifier information, and information about an identifier of a TN subnet. The RAN encapsulates an uplink data packet that comes from the session connection of the UE into a corresponding tunneling protocol data packet. For example, the tunneling protocol data packet carries a GTP-U TEID and/or an IP address. Further, the RAN transmits the tunneling protocol data packet in a corresponding TN subnet. For example, the RAN processes the tunneling protocol data packet so that the tunneling protocol data packet carries an identifier (for example, a VLAN identifier) of a TN subnet. In operation 1006, as shown in 1006b, for a session connection of the UE, the CN establishes an association relationship between any two or all of information about an identifier of a session connection, tunnel identifier information, and information about an identifier of a TN subnet. The CN encapsulates a downlink data packet that comes from the session connection of the UE into a corresponding tunneling protocol data packet. The tunneling protocol data packet carries a GTP-U TEID and/or an IP address. The CN transmits the tunneling protocol data packet in a corresponding TN subnet. For example, the CN processes the tunneling protocol data packet so that the tunneling protocol data packet carries an identifier (for example, a VLAN identifier) of a TN subnet.

Optionally, for data transmission between base stations in the RAN (for example, through an X2/Xn interface between the base stations in the RAN), a possible implementation is as follows: For a session connection of the UE, a first base station learns of, by using an interface message between the first base station and a second base station, information (for example, a GTP-U TEID and/or an IP address) related to a tunnel established by the second base station for the session connection of the UE. In this case, the first base station establishes an association relationship between any two or all of information about an identifier of a session connection that needs to be used to forward data to the second base station, tunnel identifier information, and information about an identifier of a TN subnet. When the first base station sends data of the session connection of the UE to the second base station, the RAN of the first base station encapsulates a data packet into a corresponding tunneling protocol data packet. For example, the tunneling protocol data packet carries a GTP-U TEID and/or an IP address. Further, the RAN transmits the tunneling protocol data packet in a corresponding TN subnet. For example, the RAN processes the tunneling protocol data packet so that the tunneling protocol data packet carries an identifier (for example, a VLAN identifier) of a TN subnet.

Another possible implementation is as follows: For a session connection of the UE, when the session connection is transmitted in the RAN, the RAN allocates one or more data radio bearer resources (for example, DRBs) to the session connection. A first base station learns of, by using an interface message between the first base station and a second base station, information (for example, a GTP-U TEID and/or an IP address) about a tunnel established by the second base station for a data radio bearer of the UE. In this case, the first base station establishes an association relationship between any two or three or all of information about an identifier of a session connection that needs to be used to forward data to the second base station, information about an identifier of a data radio bearer, tunnel identifier information, and information about an identifier of a TN subnet. When the first base station forwards data of the data radio bearer of the UE to the second base station, the RAN of the first base station encapsulates a data packet into a corresponding tunneling protocol data packet. For example, the tunneling protocol data packet carries a GTP-U TEID and/or an IP address. Further, the RAN transmits the tunneling protocol data packet in a corresponding TN subnet. For example, the RAN processes the tunneling protocol data packet so that the tunneling protocol data packet carries an identifier (for example, a VLAN identifier) of a TN subnet.

It should be noted that in the solution of this embodiment, a correspondence between a session connection and a data transmission tunnel is not limited. To be specific, there may be the following implementation: One data transmission tunnel is established for one session connection, a plurality of data transmission tunnels are established for one session connection, or one data transmission tunnel is established for a plurality of session connections.

Through implementation of the solution of this embodiment, during creation of an end-to-end network slice, after each subdomain subnet is created and the UE is associated with an end-to-end subnet, subdomains can serve the UE by using consistent subnet configurations, so that a subnet mapping between the RAN, the CN, and a TN, especially a mapping between a RAN subdomain subnet and a TN subdomain subnet, and/or an intra-RAN/CN subnet mapping such as an intra-RAN/CN subnet QoS mapping method are or is implemented. End-to-end subnet information is transmitted by using management plane signaling, and a mapping is implemented between subdomain subnets, to provide effective procedure support for conversion on the RAN side from transmitting a data packet in a RAN subnet to transmitting a data packet in a TN subnet. Specifically, the core network device identifies a subnet (or a network slice) by using information about an identifier of a session connection between the RAN and the CN, and the radio access network device obtains a correspondence between information about an identifier of a session connection and a VLAN (on the RAN side), and/or the core network device establishes a correspondence between information about an identifier of a session connection and a VLAN (on the CN side), to establish a slice mapping between the RAN, the CN, and the TN.

Based on various feasible management plane signaling configuration procedures shown in the part 1, an embodiment of the present invention further provides a communication method 1100. The method may be applied to the system 1000. It should be noted that in a part 1 in a dashed-line box in the system 1000, only a case in which information exchange interfaces exist between a network manager, a RAN manager, a TN manager, and a CN manager is shown. However, it should be understood that management plane signaling interworking procedures of the network manager, the RAN manager, the TN manager, and the CN manager may be implemented in various manners, provided that information required for associating subnets of a RAN subdomain, a TN subdomain, and a CN subdomain can be transmitted between the network manager, the RAN manager, the TN manager, and the CN manager. The information includes but is not limited to information about an identifier of each subdomain subnet, information about a correspondence/mapping relationship between any two subdomain slices, information about a correspondence/mapping relationship between each subdomain subnet and an end-to-end network subnet created by the system, and at least one type of the following information that may be used in slice management and slice mapping: a UE ID, a session ID, a tunnel ID, information about an identifier of a subnet, a core network user plane IP address, information about an identifier of a QoS flow, an ID of a DRB, information about an identifier of an IP data flow, information about a group identifier of IP data flows, and the like. For some implementation scenarios of a specific management plane procedure involved in the system 1000, refer to any one of the method 700, the method 800, and the method 900. The method 1100 is described from a perspective of a procedure in which a terminal device accesses an end-to-end subnet. One of key points of the method 1100 may be described as follows: A core network identifies, by using data flows with same or similar quality of service requirements, a subnet to which transmitted data belongs, and a RAN side obtains a correspondence between a RAN subdomain subnet (transmitted data), the data flow, and a TN subnet. When the data flows with same or similar quality of service requirements are QoS flows and a transport network slice is a VLAN, an example of this solution is that a RAN obtains a correspondence between information about an identifier of a subnet, information about an identifier of a QoS flow, and a VLAN ID. Optionally, if information about an identifier of the data flow is carried in information about an identifier of a user plane tunnel, for example, the identifier of the data flow is an identifier of a QoS flow and the identifier of the QoS flow is included in a GTP-U header, the method 1100 is similar to the method 900 in terms of this point.

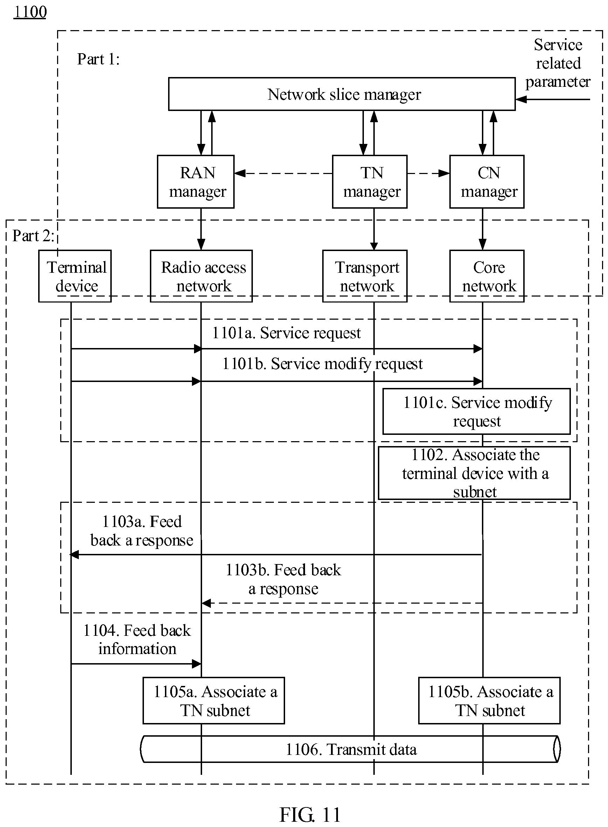

An implementation process of the method 1100 is shown in FIG. 11. The method 1100 includes operation 1101, operation 1102, operation 1103, operation 1104, operation 1105, and operation 1106 that are respectively similar to operation 1001, operation 1002, operation 1003, operation 1004, operation 1005, and operation 1006 in FIG. 10 in terms of procedures. However, it should be noted that information transmitted between execution bodies in specific procedures may be different, and some operations may have alternatives.

Operation 1101: A terminal device initiates a service request/service modify request; or a core network device initiates a service modify request.

Optionally, as shown in 1101a, an operation of initiating the service request by the terminal device is similar to operation 1001. For implementation, refer to operation 1001. Details are not described herein again.

Optionally, as shown in 1101b, the terminal device sends a request message to a core network, where the request message is used to modify an established session connection, for example, add one or more QoS flows or a group of QoS flows. Optionally, similar to operation 1001, the request message may include reference information used to assist in network slice selection. The reference information may be any one or any combination of the following parameters: (1) information about an identifier of the UE, where the information about the identifier of the UE may include an international mobile subscriber identity (international mobile subscriber identifier, IMSI), a temporary mobile subscriber identity (temporary mobile subscriber identity, TMSI), or a temporary UE identifier (temp UE ID), (2) network slice selection assistance information (network slice selection assistance information, NSSAI), (3) a slice type identifier (slice type ID), (4) service management NSSAI (session management NSSAI, SM-NSSAI), (5) a service type identifier (service type ID) of a subdomain, (6) a tenant identifier (tenant ID), (7) a user group identifier (user group ID), (8) single NSSAI (single NSSAI), (9) an index value (slice index) used to represent a slice type or a slice identifier, (10) an identifier of an end-to-end subnet (subnet work ID), and (11) information about an identifier of a subdomain subnet (for example, at least one of an identifier of a RAN subnet, an identifier of a CN subnet, and an identifier of a TN subnet).

Optionally, as shown in 1101c, the core network device may send a request message, where the request message is used to modify an established session connection of the UE, for example, add one or more QoS flows or a group of QoS flows. Optionally, the request message may further include at least one of service information of the UE, core network information, operator policy information, and the like, to assist the core network in associating the UE with a subnet.

Operation 1102: Associate the terminal device with a subnet.

After receiving the service request in operation 1101, the core network device creates a session and/or a QoS flow accordingly, or after receiving the service modify request in operation 1101, the core network device modifies a session and/or a QoS flow accordingly, associates the UE with a subnet, and allocates a corresponding QoS parameter to the subnet. The QoS parameter includes information about an identifier of a QoS flow. In an implementation, the information about the identifier of the QoS flow is carried in a GTP-U header.

Operation 1103: Feed back a response.

Optionally, as shown in 1103a, the CN feeds back information to the UE, and the information includes but is not limited to any one or more of the following information: information about an identifier of the subnet that the CN associates with the UE, information about an identifier of a session connection, the information about the identifier of the QoS flow, and the like. Optionally, as shown in 1103b, the CN feeds back information to a RAN, and the information includes but is not limited to any one or more of the following information: information about an identifier of the subnet that the CN associates with the UE, information about a core network user plane IP address, information about an identifier of a session connection, tunnel establishment related information (uplink and/or downlink), the information about the identifier of the QoS flow, and the like.

The information about the identifier of the subnet may include any one or any combination of the following parameters: network slice selection assistance information (network slice selection assistance information, NSSAI), a slice type identifier (slice type ID), service management NSSAI (session management NSSAI, SM-NSSAI), single NSSAI (single NSSAI), a service type identifier (service type ID), a service type identifier of a subdomain, a tenant identifier (tenant ID), a user group identifier (user group ID), an index value (slice index) used to represent a slice type or a slice identifier, an identifier of an end-to-end subnet (subnet work ID), and an identifier of a subdomain subnet (for example, an identifier of a RAN subnet, an identifier of a CN subnet, or an identifier of a TN subnet).

(Optional) Operation 1104: Feed back information.

This operation is similar to the procedure of operation 1004. In an optional design, the UE may send any one or more of the information about the identifier of the subnet that the CN associates with the UE, the information about the identifier of the session connection, the information about the identifier of the QoS flow, and the like to a RAN side device by using an air interface signaling message such as a Uu interface message.

Operation 1105: Associate a TN subnet.

On a RAN side, as shown in 1105a, an optional design in which the radio access network device associates a RAN side subnet (or data) with a TN side subnet is as follows: The radio access network device associates a TN subnet with an end-to-end network subnet created by a system and a corresponding RAN subdomain subnet based on the information that is about the identifier of the subnet and that is reported by the UE (for example, in operation 1104) or provided by the CN (for example, in operation 1103). The radio access network device obtains a mapping relationship between information (for example, a VLAN ID obtained in various procedures in the part 1) about an identifier of a subnet, information about an identifier of a QoS flow, information about an identifier of a TN subnet, and the like based on information that is about an identifier of a TN subnet and that is obtained by the RAN. For example, the mapping relationship is specifically represented as a mapping between information about an identifier of a subnet, information about an identifier of a session connection, information (for example, a VLAN ID) about an identifier of a TN subnet, and a QoS range. The information about the identifier of the subnet may be information about an identifier of the end-to-end subnet created by the system, information about an identifier of a RAN subdomain subnet corresponding to the end-to-end subnet, or information about the end-to-end subnet or the RAN subdomain subnet. This is not limited herein. The QoS range is a QoS flow related parameter. For example, when a plurality of QoS flows belong to a same slice, the QoS range is used to describe information about the plurality of QoS flows, and in this case, the QoS range is equivalently used to represent a set of QoS flows. When there is only one QoS flow, the QoS range may be replaced with information about an identifier of the QoS flow or quantity information of the QoS flow. The VLAN ID is a VLAN identifier of a TN subnet associated with the RAN side.

On a CN side, as shown in 1105b, an optional design in which the core network device associates a CN side subnet (or data) with a TN side subnet is as follows: The core network device obtains information about an identifier of a subnet based on a message reported by the UE or another core network device, and obtains a mapping relationship between information about an identifier of a subnet, information about an identifier of a QoS flow, information about an identifier of a TN subnet, and the like based on information (for example, a VLAN ID obtained in various feasible procedures in the part 1) that is about an identifier of a TN subnet and that is obtained by the CN and an association relationship between information about an identifier of a subnet and information about an identifier of a TN subnet. For example, the mapping relationship is specifically represented as a mapping relationship between information about an identifier of a subnet, information about an identifier of a session connection, tunnel establishment related information, information (for example, a VLAN ID) about an identifier of a TN subnet, and a QoS range. The information about the identifier of the subnet may be information about an identifier of the end-to-end subnet created by the system, information about an identifier of a RAN subdomain subnet corresponding to the end-to-end subnet, or information about the end-to-end subnet or the RAN subdomain subnet. This is not limited herein. The QoS range is a QoS flow related parameter. For example, when a plurality of QoS flows belong to a same slice, the QoS range represents information about the plurality of QoS flows, and in this case, the QoS range is equivalently used to represent a set of QoS flows. When there is only one QoS flow, the QoS range may be replaced with information about an identifier of the QoS flow or quantity information of the QoS flow. The VLAN ID is a VLAN identifier of a TN subnet associated with the CN side. Through operation 1105, a correspondence between a RAN subnet, a CN subnet, and a TN subnet that belong to a same end-to-end subnet can be obtained, network subnet-based uplink/downlink data transmission is performed through collaboration between subdomains, and end-to-end transmission performance is enhanced.

Operation 1106: Transmit data.

Optionally, for data transmission between the RAN and the CN, when forwarding uplink/downlink data, the RAN/CN may add, based on at least QoS flow related information such as a QoS range or information about an identifier of a QoS flow, a data packet corresponding to a subnet to a corresponding TN subnet for sending. For example, a specific implementation method may be as follows: For a QoS flow of the UE, the RAN establishes an association relationship between any two or three or all of information about an identifier of a session connection, tunnel identifier information, information about an identifier of a QoS flow, and information about an identifier of a TN subnet. The RAN encapsulates an uplink data packet that comes from the QoS flow of the UE into a corresponding tunneling protocol data packet. For example, the tunneling protocol data packet carries a GTP-U TEID and/or an IP address. Further, the RAN transmits the tunneling protocol data packet in a corresponding TN subnet. For example, the RAN processes the tunneling protocol data packet so that the tunneling protocol data packet carries an identifier (for example, a VLAN identifier) of a TN subnet. For a QoS flow of the UE, the CN establishes an association relationship between any two or three or all of information about an identifier of a session connection, tunnel identifier information, information about an identifier of a QoS flow, and information about an identifier of a TN subnet. The CN encapsulates a downlink data packet that comes from the QoS flow of the UE into a corresponding tunneling protocol data packet. For example, the tunneling protocol data packet carries a GTP-U TEID and/or an IP address. Further, the CN transmits the tunneling protocol data packet in a corresponding TN subnet. For example, the CN processes the tunneling protocol data packet so that the tunneling protocol data packet carries an identifier (for example, a VLAN identifier) of a TN subnet.

Optionally, for data transmission between base stations in the RAN (for example, through an X2/Xn interface between the base stations in the RAN),
a possible implementation is as follows: For a QoS flow/a group of QoS flows of the UE, a first base station learns of, by using an interface message between the first base station and a second base station, information (for example, a GTP-U TEID and/or an IP address) about a tunnel established by the second base station for the QoS flow/QoS flow set of the UE. In this case, the first base station establishes an association relationship between any two or three or all of information about an identifier of a session connection that needs to be used to forward data to the second base station, tunnel identifier information, information about a QoS range, and information about an identifier of a TN subnet. When the first base station sends data of the QoS flow/QoS flow set of the UE to the second base station, the first base station encapsulates a data packet into a corresponding tunneling protocol data packet. For example, the tunneling protocol data packet carries a GTP-U TEID and/or an IP address. Further, the RAN transmits the tunneling protocol data packet in a corresponding TN subnet. For example, the RAN processes the tunneling protocol data packet so that the tunneling protocol data packet carries an identifier (for example, a VLAN identifier) of a TN subnet.

Another possible implementation is as follows: For a QoS flow/a group of QoS flows of the UE, when the QoS flow/the group of QoS flows are transmitted in the RAN, the RAN allocates one or more data radio bearer resources (for example, DRBs) to the QoS flow/the group of QoS flows. A first base station learns of, by using an interface message between the first base station and a second base station, information (for example, a GTP-U TEID and/or an IP address) about a tunnel established by the second base station for a data radio bearer of the UE. In this case, the first base station establishes an association relationship between any two or three or all of information about an identifier of a session connection that needs to be used to forward data to the second base station, information about an identifier of a data radio bearer, tunnel identifier information, and information about an identifier of a TN subnet. When the first base station forwards data of the data radio bearer of the UE to the second base station, the RAN of the first base station encapsulates a data packet into a corresponding tunneling protocol data packet. For example, the tunneling protocol data packet carries a GTP-U TEID and/or an IP address. Further, the RAN transmits the tunneling protocol data packet in a corresponding TN subnet. For example, the RAN processes the tunneling protocol data packet so that the tunneling protocol data packet carries an identifier (for example, a VLAN identifier) of a TN subnet.

It should be noted that in the solution of this embodiment, a correspondence between a QoS flow/a group of QoS flows and a data transmission tunnel is not limited. To be specific, there may be the following implementation: One data transmission tunnel is established for one QoS flow/one group of QoS flows, a plurality of data transmission tunnels are established for one QoS flow/one group of QoS flows, or one data transmission tunnel is established for a plurality of QoS flows/a plurality of groups of QoS flows.

Through implementation of the solution of this embodiment, during creation of an end-to-end subnet, after each subdomain subnet is created and the UE is associated with an end-to-end subnet, subdomains can serve the UE by using consistent subnet configurations, so that a subdomain subnet mapping between the RAN, the CN, and a TN, especially a mapping between a RAN subdomain subnet and a TN subdomain subnet, and/or an intra-RAN/CN subnet QoS mapping are or is implemented. End-to-end subnet information is transmitted by using management plane signaling, and a mapping is implemented between subdomain subnets, to provide effective procedure support for conversion on the RAN side from transmitting a data packet in a RAN subnet to transmitting a data packet in a TN subnet, so that the RAN can establish an association relationship between a RAN slice instance (or subnet) and a TN slice instance (or subnet). Specifically, the core network identifies, by using data flows with same or similar quality of service requirements, a subnet to which transmitted data belongs, and the RAN side obtains a correspondence between a RAN side subnet (transmitted data), the data flow, and a transport network subnet, and/or the core network device obtains a correspondence between a CN side subnet (transmitted data), the data flow, and a transport network subnet, to establish a slice mapping between the RAN, the CN, and the TN.

Based on various possible implementations in the part 1 and the part 2, an embodiment of this application further provides a communication method 1200. The method and a system 1200 may be used in an independent solution in which a radio access network device side establishes a mapping between a RAN subnet and a TN subnet for data transmission, to resolve a problem of a data mapping in network slice-based transmission between a RAN and a TN, and also help resolve a problem of collaborated transmission between subdomains in an end-to-end subnet of a system in a more macro procedure of the entire system based on various possible implementations of the part 1 and the part 2.

A process in which a slice mapping is established between a RAN subdomain and a TN subdomain when a radio access network device transmits a data packet of a user over a RAN-CN interface is described from a perspective of distinguishing between end-to-end slices at a granularity of a session (session). A design of the method 1200 includes the following operations.

Operation 1201: Create a protocol data unit session.

The radio access network device creates the protocol data unit session (protocol data unit session, PDU session) for UE, and obtains information about a subnet (slice) corresponding to the PDU session, so that the subnet (slice) corresponding to the PDU session is aligned with a core network subnet (slice). For example, data of a session x belongs to a slice y, the session x is mapped to a DRB m and a DRB n on an air interface, and the radio access network device may learn, through management plane configuration, that a TN slice of the slice y is a VLAN k.

Operation 1202: Identify a data packet.

For uplink data, the radio access network device receives data of a user on the DRB m, and adds the data to a GTP-U tunnel, for example, adds an identifier TE ID z (corresponding to the session x) to a GTP-U data packet, so that a core network device distinguishes between data of different subnets (slices). To transmit corresponding subnet information to a TN, a VLAN ID needs to be added to a data packet. There may be the following two specific methods:

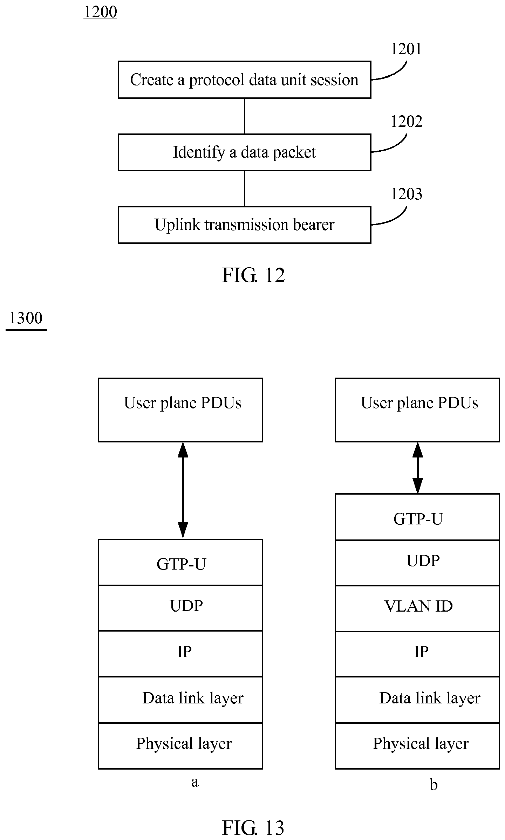

FIG. 13 shows a protocol stack 1300 of a radio access network device (for example, a base station) on a RAN-CN interface. User plane PDUs are user plane protocol data units, UDP is a user datagram protocol (user datagram protocol), GTP-U is a GPRS tunneling protocol-user plane protocol, Data link layer is a data link layer, and Physical layer is a physical layer.

Optional manner 1: An identifier, for example, a VLAN ID, of a transport subnet may be added to a data packet at an IP layer, the data link layer, or the physical layer in a protocol stack shown in FIG. 13(a).

Optional manner 2: For example, a protocol layer may be newly added in FIG. 13(b) to identify an identifier (for example, a VLAN ID) of a transport subnet. Optionally, as shown in the figure, a protocol layer is newly added to an IP layer, and an identifier (for example, the VLAN k) of a transport subnet is added to protocol data at the layer.

Operation 1203: Uplink transmission bearer.

The data packet is sent through a physical port of the radio access network device (base station).

Optionally, if a subnet (or a slice) needs to be further distinguished based on a physical transmission port, the data packet is sent on a physical port corresponding to the subnet (slice), so that the data packet is added to a corresponding TN subnet. Optionally, if a subnet (or a slice) further needs to be distinguished based on an IP address, the data packet carries a corresponding IP address, so that the data packet is added to a corresponding TN subnet.

The values m, n, k, and z may all be natural numbers.

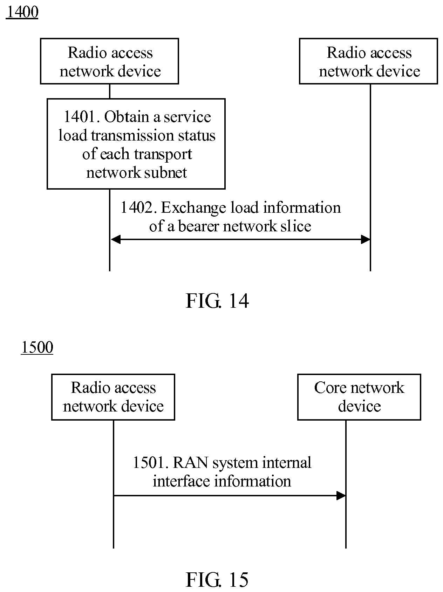

An embodiment of this application further provides a communication method 1400. As shown in FIG. 14, an implementation process of the method includes the following operations:
Operation 1401: Obtain a service load transmission status of each transport network subnet.

In this operation, a radio access network device (for example, a base station) detects and collects statistics about the service load transmission status of each transport subnet, so that a RAN system can learn of a load status of the transport subnet (for example, a VLAN).

Operation 1402: Exchange load information of a bearer network slice through a radio access network system internal interface.

The RAN internal interface is usually an interface between base stations. The base station described herein may be a base station that belongs to 2G, 3G, 4G, 5G, or a future evolved wireless network.

In operation 1402, in a design, the load information of the bearer network slice is exchanged through the RAN internal interface such as an X2 or Xn interface. The information relates to the bearer network slice and includes at least one type of the following information: (1) information about an identifier of at least one TN subnet, (2) information about an identifier of a subnet, (3) load information of the at least one TN subnet (for example, the load information may be a specific value or a qualitative description such as low/medium/high), and (4) a coverage used to identify a related TN subnet, for example, in a RAN/CN/on a RAN-CN interface/in an entire network.

The Xn interface is an interface between 5G radio access network devices, for example, an interface between gNBs. The gNB is a base station device in a 5G system. An eNB may be usually considered as a base station device in a 4G LTE system. An eNB and a gNB that are interconnected through an Xn interface may be connected to a core network in the 5G system. The X2 interface is also an interface between radio access network devices, for example, an interface between eNBs.

Another type of interface between radio access network devices may also be defined as required. A purpose of this embodiment is to exchange load information of a TN subnet in a RAN system internal interface, to increase system efficiency of a subsequent handover procedure, load balancing, and an SON procedure. Therefore, neither a specific interface name nor a specific interface type is limited herein.

In a radio access network, base stations need to be interconnected and communicate with each other by using an interface message, to complete a handover procedure and a dual/multi-connectivity process. In addition, interference may exist between base stations, and interference coordination needs to be performed, or a self-organizing network needs to be created and maintained. To complete the foregoing procedure, a base station needs to exchange usage of a resource with a neighboring base station. The resource includes an air interface resource, an interface resource, and the like. Through implementation of the solution of this embodiment, resource usage of a base station may be reported in a dimension of a subnet/TN subnet, so that network management, handover determining, a load balancing decision, and the like can be performed in the radio access network based on the subnet.

The method and a system 1400 provided in this embodiment may run independently, or may run in combination with any one of the foregoing embodiments of the methods/systems 200 to 1200. As shown in FIG. 15, an embodiment of this application further provides a communication method 1500. The method 1500 includes the following operation:
1501. Notify RAN system internal interface information.

In this operation, a RAN side device (for example, a base station) may notify a CN device of RAN internal interface establishment information through an interface between a RAN and the CN device.

An internal interface on a RAN side is usually an interface between base stations. The base station described herein may be a base station that belongs to 2G, 3G, 4G, 5G, or a future evolved wireless network.

An Xn/X2 interface is used as an example. The Xn interface is an interface between gNBs. The gNB is a base station device in a 5G system. An eNB is usually a base station device in a 4G LTE system. An eNB and a gNB that are interconnected through an Xn interface may be connected to a core network in the 5G system. The X2 interface is an interface between eNBs. When the interface is an X2 interface, interface establishment information may be information defined in the section 9.2.3.29 X2 TNL Configuration Info in the communication protocol version 3GPP TS36.423.

A CN is notified of the RAN internal interface establishment information, to support an automatic RAN internal interface establishment procedure in a self-organizing network (self-organizing network, SON), for example, a stream control transmission protocol connection establishment process on an Xn/X2 control plane (Xn/X2 SCTP association). Optionally, the RAN internal interface establishment information may further include at least one type of the following information: information about an identifier of a control plane TN subnet, information about an identifier of a subnet (corresponding to the control plane TN subnet), information about a TN transmission resource used for an interface control plane (for example, a transport layer address corresponding to each TN subnet), and corresponding control plane indication information (if there is no slice on the control plane, the information does not exist).

Optionally, the RAN interface establishment information may include at least one type of the following information: an identifier of a user plane TN subnet, information about an identifier of a subnet (corresponding to the user plane TN subnet), information about a TN transmission resource used for an interface user plane (for example, a transport layer address and/or tunnel establishment information corresponding to each TN subnet), and corresponding user plane indication information.

Optionally, the RAN internal interface establishment information may be exchanged during establishment of a RAN internal interface control plane. For example, during establishment of the RAN internal interface control plane (for example, in an SCTP association procedure related to an X2/Xn interface), at least one piece of the following information is exchanged through an interface between base stations: information about an identifier of a user plane TN subnet and information about an identifier of a subnet (corresponding to the identifier of the user plane TN subnet).

In the radio access network, an interface needs to be established between a base station and the core network, to exchange control information/transmit user data. In addition, an interface also needs to be established between base stations, and transport layer information for establishing the interface between base stations may be forwarded by the core network. Therefore, a base station needs to notify the core network of necessary information for establishing an interface (including a control plane and a user plane) between the base station and a neighboring base station. Through implementation of the solution of this embodiment, for a scenario in which network slices may be introduced into a future network, to implement isolation between network slices, different transport layer establishment information (for example, different transport layer addresses) may be configured for different network slices on an interface between base stations, so that control plane connections and/or user data transmission tunnels belonging to different network slices are established on the interface between base stations.

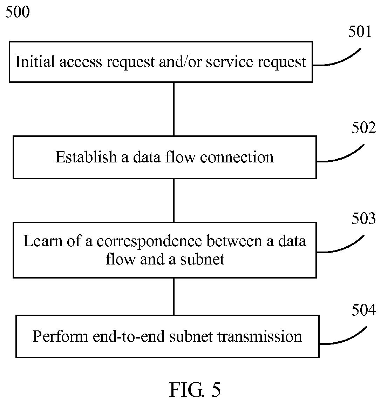

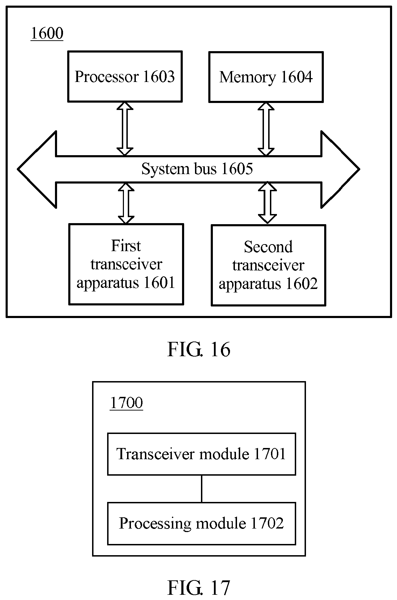

The method and a system 1500 provided in this embodiment may run independently, or may run in combination with any one of the foregoing embodiments of the methods/systems 200 to 1400. The foregoing describes in detail the communication method and the system in the embodiments of this application with reference to FIG. 3 to FIG. 15. The following describes in detail apparatuses in the embodiments of this application with reference to FIG. 16 to FIG. 22.

An embodiment of this application provides a radio access network device 1600. The following describes a structure and a function of the radio access network device 1600 with reference to FIG. 16. FIG. 16 is a schematic block diagram of the radio access network device 1600 according to an embodiment of this application. As shown in FIG. 16, the radio access network device 1600 includes a first transceiver apparatus 1601, a second transceiver apparatus 1602, and at least one processor 1603. Optionally, the radio access network device 1600 may further include a memory 1604. The first transceiver apparatus 1601, the second transceiver apparatus 1602, the at least one processor 1603, and the memory 1604 communicate with each other and transmit a control signal and/or a data signal to each other through an internal connection channel (for example, a system bus 1605 shown in the figure). The memory 1604 is configured to store a computer program, and the processor 1603 is configured to invoke the computer program from the memory 1604 and run the computer program, to control the first transceiver apparatus 1601 and the second transceiver apparatus 1602 to receive or send a signal, so that the radio access network device communicates with a network side device by using the first transceiver apparatus, and the radio access network device communicates with a terminal device by using the second transceiver apparatus. In this way, the radio access network device 1600 can perform the operations of the radio access network device in any possible design scheme of the communication methods/systems 200 to 1500 provided in the embodiments of this application. For brevity, details are not described herein again.

Optionally, the processor 1603 and the memory 1604 may be combined into a processing apparatus, and the processor 1603 is configured to execute program code stored in the memory 1604 to implement the foregoing functions. In specific implementation, the memory 1604 may be integrated into the processor 1603, or may be independent of the processor 1603.

Optionally, the first transceiver apparatus in the radio access network device 1600 may be specifically implemented as a wired communications interface, or may be specifically implemented as a communications interface based on a wireless air interface technology. The second transceiver apparatus described herein may be specifically implemented as a communications interface based on the wireless air interface technology. Optionally, if both the first transceiver apparatus and the second transceiver apparatus are communications interfaces based on the wireless air interface technology, the first transceiver apparatus and the second transceiver apparatus may be implemented by using one wireless transceiver apparatus, or may be implemented by using two parallel wireless transceiver apparatuses.

An embodiment of this application provides a radio access network device 1700. The following describes a structure and a function of the radio access network device 1700 with reference to FIG. 17. FIG. 17 is a schematic block diagram of the radio access network device 1700 according to an embodiment of this application. As shown in FIG. 17, the radio access network device 1700 includes a transceiver module 1701 and a processing module 1702. The transceiver module 1701 and the processing module 1702 communicate with each other and transmit a control signal and/or a data signal to each other through an internal connection channel. The processing module 1702 is configured to control the transceiver module 1701 to receive or send a signal, so that the radio access network device communicates with a network side device and/or a terminal device by using the transceiver module 1701. Through the control operation performed by the processing module 1702, the radio access network device 1700 can perform the operations of the radio access network device in any possible design scheme of the communication methods/systems 200 to 1500 provided in the embodiments of this application. Optionally, the transceiver module 1701 in the radio access network device 1700 may include a wired communications interface module, or may include a communications interface module based on a wireless air interface technology, or may include a communications interface module with a wired communication function and a communications interface module with a wireless communication function. For example, when the transceiver module 1701 includes a communications interface module with a wired communication function and a communications interface module with a wireless communication function, the wired communication function module is configured to communicate with the network side device, and the wireless communication function module is configured to communicate with the terminal device. When the transceiver module 1701 is a communications interface module with a wireless communication function, the transceiver module 1701 may further include a first transceiver apparatus and a second transceiver apparatus. Both the first transceiver apparatus and the second transceiver apparatus are communications interfaces based on a wireless air interface technology. The first transceiver apparatus and the second transceiver apparatus may be implemented by using one wireless transceiver apparatus or by using two parallel wireless transceiver apparatuses.

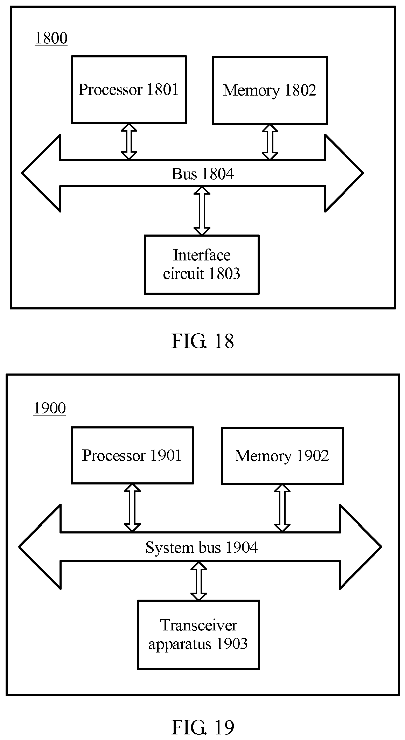

An embodiment of this application provides a system chip 1800. The following describes a structure and a function of the system chip 1800 with reference to FIG. 18. The system chip 1800 may be applied to the radio access network device 1600 or the radio access network device 1700. Through processing performed by the system chip, the radio access network device can perform the operations of the radio access network device in any possible design scheme of the communication methods/systems 200 to 1500 provided in the embodiments of this application. FIG. 18 is a schematic block diagram of the system chip 1800 according to an embodiment of this application. As shown in FIG. 18, the system chip 1800 includes at least one processor 1801, a memory 1802, an interface circuit 1803, and a bus 1804. The at least one processor 1801, the memory 1802, and the interface circuit 1803 are coupled by using the bus 1804. The system chip 1800 interacts with the radio access network device/another device in a network by using the interface circuit 1803. The memory 1802 stores a program instruction, and the at least one processor 1801 invokes the program instruction stored in the memory 1802, so that the radio access network device 1600 or the radio access network device 1700 can perform the operations of the radio access network device in any possible design scheme of the communication methods/systems 200 to 1500 provided in the embodiments of this application. For brevity, details are not described herein again. Optionally, the processor 1801 and the memory 1802 may be combined into a processing apparatus, and the processor 1801 is configured to execute program code stored in the memory 1802 to implement the foregoing functions. In specific implementation, the memory 1802 may be integrated into the processor 1801, or may be independent of the processor 1801.

An embodiment of this application provides a core network device 1900. The following describes a structure and a function of the core network device 1900 with reference to FIG. 19.

FIG. 19 is a schematic block diagram of the core network device 1900 according to an embodiment of this application. As shown in FIG. 19, the core network device 1900 includes at least one processor 1901, a memory 1902, a transceiver apparatus 1903, and a system bus 1904. The at least one processor 1901, the memory 1902, and the transceiver apparatus 1903 are coupled by using the system bus 1904. The processor 1901 controls the transceiver apparatus 1903, so that the core network device communicates with a network side device by using the transceiver apparatus 1903. The memory 1902 stores a program instruction, and the at least one processor 1901 invokes the program instruction stored in the memory 1902 to perform the operations of the core network device in any possible design scheme of the communication methods/systems 200 to 1500 provided in the embodiments of this application. For brevity, details are not described herein again.

Optionally, the processor 1901 and the memory 1902 may be combined into a processing apparatus, and the processor 1901 is configured to execute program code stored in the memory 1902 to implement the foregoing functions. In specific implementation, the memory 1902 may be integrated into the processor 1901, or may be independent of the processor 1901.

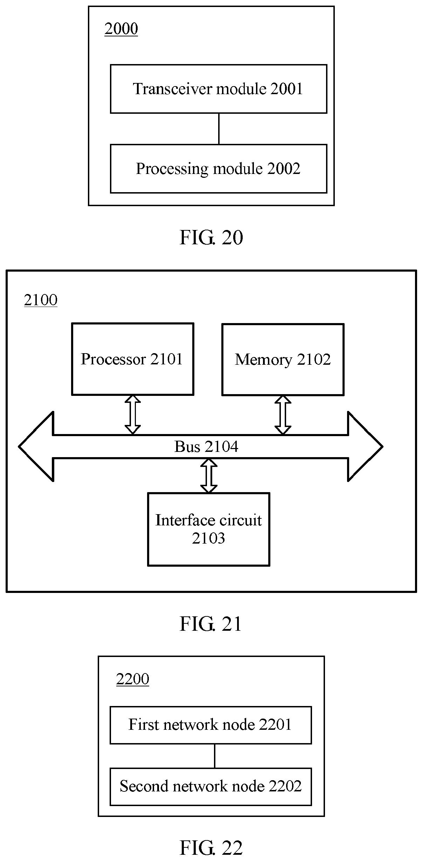

An embodiment of this application provides a core network device 2000. The following describes a structure and a function of the core network device 2000 with reference to FIG. 20.

FIG. 20 is a schematic block diagram of the core network device 2000 according to an embodiment of this application. As shown in FIG. 20, the core network device 2000 includes a transceiver module 2001 and a processing module 2002. The transceiver module 2001 and the processing module 2002 communicate with each other and transmit a control signal and/or a data signal to each other through an internal connection channel. The processing module 2002 is configured to control the transceiver module 2001 to receive or send a signal, so that the core network device 2000 communicates with a network side device and/or a terminal device by using the transceiver module 2001. Through the control operation performed by the processing module 2002, the core network device 2000 can perform the operations of the core network device in any possible design scheme of the communication methods/systems 200 to 1500 provided in the embodiments of this application. Optionally, the transceiver module 2001 in the core network device 2000 may include a wired communications interface module, or may include a communications interface module based on a wireless air interface technology, or may include a communications interface module with a wired communication function and a communications interface module with a wireless communication function.

An embodiment of this application provides a system chip 2100. The following describes a structure and a function of the system chip 2100 with reference to FIG. 21. The system chip 2100 may be applied to the core network device 1900 or the core network device 2000. Through processing performed by the system chip 2100, the core network device can perform the operations of the core network device in any possible design scheme of the communication methods/systems 200 to 1500 provided in the embodiments of this application. FIG. 21 is a schematic block diagram of the system chip 2100 according to an embodiment of this application. As shown in FIG. 21, the system chip 2100 includes at least one processor 2101, a memory 2102, an interface circuit 2103, and a bus 2104. The at least one processor 2101, the memory 2102, and the interface circuit 2103 are coupled by using the bus 2104. The system chip 2100 interacts with the core network device/another device in a network by using the interface circuit 2103. The memory 2102 stores a program instruction, and the at least one processor 2101 invokes the program instruction stored in the memory 2102, so that the core network device 1900 or the core network device 2000 can perform the operations of the core network device in any possible design scheme of the communication methods/systems 200 to 1500 provided in the embodiments of this application. For brevity, details are not described herein again. Optionally, the processor 2101 and the memory 2102 may be disposed as a processing apparatus, and the processor 2101 is configured to execute program code stored in the memory 2102 to implement the foregoing functions. In specific implementation, the memory 2102 may be integrated into the processor 2101, or may be independent of the processor 2101.

It should be understood that the processor in the embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logical device, a discrete gate or a transistor logical device, a discrete hardware component, or the like. The general-purpose processor may be a microprocessor, or the processor may be any conventional processor or the like.

It may be further understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of random access memories (random access memory, RAM) may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). An embodiment of this application further provides a wireless communications system 2200. FIG. 22 is a schematic diagram of the wireless communications system 2200 according to an embodiment of this application. As shown in FIG. 22, the wireless communications system 2200 includes a first network node 2201 and a second network node 2202. The first network node 2201 may be the radio access network device in any possible design scheme of the communication methods/systems 200 to 1500 provided in the embodiments of this application. The second network node 2202 is the core network device that cooperates with the radio access network device in any possible design scheme of the communication methods/systems 200 to 1500.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and there may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (ROM), a random access memory (RAM), a magnetic disk, or an optical disc.

In the foregoing specific implementations, the objectives, technical solutions, and benefits of the embodiments of the present invention are further described in detail. It should be understood that the foregoing descriptions are merely specific implementations of the embodiments of the present invention, but are not intended to limit the protection scope of the embodiments of the present invention. Any modification, improvement, or the like made based on technical solutions of the embodiments of the present invention shall fall within the protection scope of the embodiments of the present invention.

## Claims

1. A communication method, comprising:
receiving (201), by a radio access network device, an uplink data packet from a terminal device;
learning of (202), by the radio access network device, identity information of the uplink data packet; and
**characterized by**: adding (203), by the radio access network device, the uplink data packet to a transport network subnet based on a correspondence between the identity information of the uplink data packet and the transport network subnet, wherein,
the identity information of the uplink data packet comprises information about an identifier of a GPRS tunneling protocol-user plane part associated with the uplink data packet.

2. The communication method according to claim 1, wherein
there is a correspondence between the identity information and a radio access network subnet, or information about an identifier of the radio access network subnet comprises the identity information; and
there is a correspondence between the radio access network subnet and the transport network subnet, so that there is a correspondence between the identity information and the transport network subnet.

3. The communication method according to any one of claims 1 to 2, comprising:
information about the correspondence between the radio access network subnet and the transport network subnet is sent by a transport network manager to a radio access network manager, and then the information about the correspondence between the radio access network subnet and the transport network subnet is sent by the radio access network manager to the radio access network device; or
information about the correspondence between the radio access network subnet and the transport network subnet is sent by a network manager to the radio access network device by using the radio access network manager.

4. A system chip (1800), wherein the system chip is applied to a radio access network device (1600), and the system chip comprises:
at least one processor (1801), a memory (1802), an interface circuit (1803) and a bus (1804), wherein
the at least one processor, the memory, and the interface circuit are coupled by using the bus; and
the system chip interacts with the radio access network device by using the interface circuit;
and the memory stores instructions which, when executed by the at least one processor, cause the radio access network device to perform the operations of the radio access network device in the method according to any one of claims 1 to 3.

5. A radio access network device (1600), wherein the radio access network device comprises:
at least one processor (1603), a memory (1604), a first transceiver apparatus (1601), a second transceiver apparatus (1602), and a system bus (1605), wherein
the at least one processor, the memory, the first transceiver apparatus, and the second transceiver apparatus are coupled by using the system bus;
the radio access network device communicates with a network side device by using the first transceiver apparatus, and the radio access network device communicates with a terminal device by using the second transceiver apparatus; and the memory stores instructions which, when executed by the at least one processor, cause the radio access network device to perform the operations of the radio access network device in the method according to any one of claims 1 to 3.

6. A communication method, comprising:
learning of (301), by a core network device, identity information of a downlink data packet; and
**characterized by**: adding (302), by the core network device, the downlink data packet to a transport network subnet based on a correspondence between the identity information of the downlink data packet and the transport network subnet, wherein, the identity information of the downlink data packet comprises information about an identifier of a GPRS tunneling protocol-user plane part associated with the downlink data packet.

7. The communication method according to claim 6, wherein
there is a correspondence between the identity information and a core network subnet, or information about an identifier of the core network subnet comprises the identity information; and
there is a correspondence between the identifier of the core network subnet and the transport network subnet, so that there is a correspondence between the identity information and the transport network subnet.

8. The communication method according to any one of claims 6 to 7, comprising:
information about the correspondence between the core network subnet and the transport network subnet is sent by a transport network manager to a core network manager, and then the information about the correspondence between the core network subnet and the transport network subnet is sent by the core network manager to the core network device; or
information about the correspondence between the core network subnet and the transport network subnet is sent by a network manager to the core network device by using a core network manager.

9. A system chip (2100), wherein the system chip is applied to a core network device (1900), and the system chip comprises:
at least one processor (2101), a memory (2102), an interface circuit (2103) and a bus (2104), wherein
the at least one processor, the memory, and the interface circuit are coupled by using the bus; and
the system chip interacts with the core network device by using the interface circuit; and the memory stores instructions which, when executed by the at least one processor, cause the core network device to perform the operations of the core network device in the method according to any one of claims 6 to 8.

10. A core network device (1900), wherein the core network device comprises:
at least one processor (1901), a memory (1902), a transceiver apparatus (1903), and a system bus (1904), wherein
the at least one processor, the memory, and the transceiver apparatus are coupled by using the system bus;
the core network device communicates with a network side device by using the transceiver apparatus; and the memory stores instructions which, when executed by the at least one processor, cause the core network device to perform the operations of the core network device in the method according to any one of claims 6 to 8.

11. A communications system, wherein the system comprises:
the radio access network device according to claim 5 and/or the core network device according to claim 10.

12. A computer storage medium, wherein the computer-readable storage medium stores instructions which, when executed by a processor of a radio access network device, cause the radio access network device to execute the method according to any one of claims 1 to 3, or when executed by a processor of a core network device, cause the core network device to execute the method according to any one of claims 6 to 8.

13. A computer program product, wherein the computer program product comprises
instructions which, when executed by a processor of a radio access network device, cause the radio access network device to execute the method according to any one of claims 1 to 3, or when executed by a processor of a core network device, cause the core network device to execute the method according to any one of claims 6 to 8.

## Patentansprüche

1. Kommunikationsverfahren, umfassend:
Empfangen (201) eines "Uplink"-Datenpakets von einem Endgerät durch ein Funkzugangsnetzgerät,
In-Erfahrung-Bringen (202) von Identitätsinformationen des "Uplink"-Datenpakets durch das Funkzugangsnetzgerät, und
**gekennzeichnet durch**: Hinzufügen (203) des "Uplink"-Datenpakets durch das Funkzugangsnetzgerät zu einem Transportnetz-Subnetz basierend auf einer Entsprechung zwischen den Identitätsinformationen des "Uplink"-Datenpakets und dem Transportnetz-Subnetz, wobei
die Identitätsinformationen des "Uplink"-Datenpakets Informationen über eine Kennung eines GPRS-Tunnelprotokoll-Nutzerebenen-Teils, die zu dem "Uplink"-Datenpaket gehören, umfassen.

2. Kommunikationsverfahren nach Anspruch 1, wobei
eine Entsprechung zwischen den Identitätsinformationen und einem Funkzugangsnetz-Subnetz besteht oder Informationen über eine Kennung des Funkzugangsnetz-Subnetzes die Identitätsinformationen umfassen, und
eine Entsprechung zwischen dem Funkzugangsnetz-Subnetz und dem Transportnetz-Subnetz besteht, so dass eine Entsprechung zwischen den Identitätsinformationen und dem Transportnetz-Subnetz besteht.

3. Kommunikationsverfahren nach einem der Ansprüche 1 bis 2, umfassend:
Informationen über die Entsprechung zwischen dem Funkzugangsnetz-Subnetz und dem Transportnetz-Subnetz werden von einem Transportnetzmanager an einen Funkzugangsnetzmanager gesendet und dann werden die Informationen über die Entsprechung zwischen dem Funkzugangsnetz-Subnetz und dem Transportnetz-Subnetz von dem Funkzugangsnetzmanager an das Funkzugangsnetzgerät gesendet, oder
Informationen über die Entsprechung zwischen dem Funkzugangsnetz-Subnetz und dem Transportnetz-Subnetz werden unter Verwendung des Funkzugangsnetzmanagers von einem Netzmanager an das Funkzugangsnetzgerät gesendet.

4. System-Chip (1800), wobei der System-Chip auf ein Funkzugangsnetzgerät (1600) angewandt wird, und der System-Chip umfasst:
mindestens einen Prozessor (1801), einen Speicher (1802), eine Schnittstellenschaltung (1803) und einen Bus (1804), wobei
der mindestens eine Prozessor, der Speicher und die Schnittstellenschaltung unter Verwendung des Buses gekoppelt sind, und
der System-Chip mit dem Funkzugangsnetzgerät unter Verwendung der Schnittstellenschaltung interagiert und der Speicher Anweisungen speichert, die bei Ausführung durch den mindestens einen Prozessor das Funkzugangsnetzgerät veranlassen, die Operationen des Funkzugangsnetzgeräts in dem Verfahren nach einem der Ansprüche 1 bis 3 durchzuführen.

5. Funkzugangsnetzgerät (1600), wobei das Funkzugangsnetzgerät umfasst:
mindestens einen Prozessor (1603), einen Speicher (1604), eine erste Sendeempfangsvorrichtung (1601), eine zweite Sendeempfangsvorrichtung (1602) und einen Systembus (1605), wobei
der mindestens eine Prozessor, der Speicher, die erste Sendeempfangsvorrichtung und die zweite Sendeempfangsvorrichtung unter Verwendung des Systembuses gekoppelt sind,
das Funkzugangsnetzgerät mit einem netzseitigen Gerät unter Verwendung der ersten Sendeempfangsvorrichtung kommuniziert und das Funkzugangsnetzgerät mit einem Endgerät unter Verwendung der zweiten Sendeempfangsvorrichtung kommuniziert, und der Speicher Anweisungen speichert, die bei Ausführung durch den mindestens einen Prozessor das Funkzugangsnetzgerät veranlassen, die Operationen des Funkzugangsnetzgeräts in dem Verfahren nach einem der Ansprüche 1 bis 3 durchzuführen.

6. Kommunikationsverfahren, umfassend:
In-Erfahrung-Bringen (301) von Identitätsinformationen eines "Downlink"-Datenpakets durch ein Kernnetzgerät und
**gekennzeichnet durch**: Hinzufügen (302) des "Downlink"-Datenpakets zu einem Transportnetz-Subnetz durch das Kernnetzgerät basierend auf einer Entsprechung zwischen den Identitätsinformationen des "Downlink"-Datenpakets und dem Transportnetz-Subnetz, wobei die Identitätsinformationen des "Downlink"-Datenpakets Informationen über eine Kennung eines GPRS-Tunnelprotokoll-Nutzerebenen-Teils, die zu dem "Downlink"-Datenpaket gehören, umfassen.

7. Kommunikationsverfahren nach Anspruch 6, wobei
eine Entsprechung zwischen den Identitätsinformationen und einem Kernnetz-Subnetz besteht oder Informationen über eine Kennung des Kernnetz-Subnetzes die Identitätsinformationen umfassen, und
eine Entsprechung zwischen der Kennung des Kernnetz-Subnetzes und dem Transportnetz-Subnetz besteht, so dass eine Entsprechung zwischen den Identitätsinformationen und dem Transportnetz-Subnetz besteht.

8. Kommunikationsverfahren nach einem der Ansprüche 6 bis 7, umfassend:
Informationen über die Entsprechung zwischen dem Kernnetz-Subnetz und dem Transportnetz-Subnetz werden von einem Transportnetzmanager an einen Kernnetzmanager gesendet und dann werden die Informationen über die Entsprechung zwischen dem Kernnetz-Subnetz und dem Transportnetz-Subnetz von dem Kernnetzmanager an das Kernnetzgerät gesendet, oder
Informationen über die Entsprechung zwischen dem Kernnetz-Subnetz und dem Transportnetz-Subnetz werden unter Verwendung eines Kernnetzmanagers von einem Netzmanager an das Kernnetzgerät gesendet.

9. System-Chip (2100), wobei der System-Chip auf ein Kernnetzgerät (1900) angewandt wird, und der System-Chip umfasst:
mindestens einen Prozessor (2101), einen Speicher (2102), eine Schnittstellenschaltung (2103) und einen Bus (2104), wobei
der mindestens eine Prozessor, der Speicher und die Schnittstellenschaltung unter Verwendung des Buses gekoppelt sind, und
der System-Chip mit dem Kernnetzgerät unter Verwendung der Schnittstellenschaltung interagiert und der Speicher Anweisungen speichert, die bei Ausführung durch den mindestens einen Prozessor das Kernnetzgerät veranlassen, die Operationen des Kernnetzgeräts in dem Verfahren nach einem der Ansprüche 6 bis 8 durchzuführen.

10. Kernnetzgerät (1900), wobei das Kernnetzgerät umfasst:
mindestens einen Prozessor (1901), einen Speicher (1902), eine Sendeempfangsvorrichtung (1903) und einen Systembus (1904), wobei der mindestens eine Prozessor, der Speicher und die Sendeempfangsvorrichtung unter Verwendung des Systembuses gekoppelt sind,
das Kernnetzgerät mit einem netzseitigen Gerät unter Verwendung der Sendeempfangsvorrichtung kommuniziert und der Speicher Anweisungen speichert, die bei Ausführung durch den mindestens einen Prozessor das Kernnetzgerät veranlassen, die Operationen des Kernnetzgeräts in dem Verfahren nach einem der Ansprüche 6 bis 8 durchzuführen.

11. Kommunikationssystem, wobei das System umfasst:
das Funkzugangsnetzgerät nach Anspruch 5 und/oder das Kernnetzgerät nach Anspruch 10.

12. Computerspeichermedium, wobei das computerlesbare Speichermedium Anweisungen speichert, die bei Ausführung durch einen Prozessor eines Funkzugangsnetzgeräts das Funkzugangsnetzgerät veranlassen, das Verfahren nach einem der Ansprüche 1 bis 3 durchzuführen, oder bei Ausführung durch einen Prozessor eines Kernnetzgeräts das Kernnetzgerät veranlassen, das Verfahren nach einem der Ansprüche 6 bis 8 durchzuführen.

13. Computerprogrammprodukt, wobei das Computerprogrammprodukt Anweisungen umfasst, die bei Ausführung durch einen Prozessor eines Funkzugangsnetzgeräts das Funkzugangsnetzgerät veranlassen, das Verfahren nach einem der Ansprüche 1 bis 3 durchzuführen, oder bei Ausführung durch einen Prozessor eines Kernnetzgeräts das Kernnetzgerät veranlassen, das Verfahren nach einem der Ansprüche 6 bis 8 durchzuführen.

## Revendications

1. Procédé de communication, comprenant :
la réception (201), par un dispositif de réseau d'accès radio, d'un paquet de données de liaison montante en provenance d'un dispositif terminal ;
l'apprentissage (202), par le dispositif de réseau d'accès radio, d'informations d'identité du paquet de données de liaison montante ; et
**caractérisé par** : l'ajout (203), par le dispositif de réseau d'accès radio, du paquet de données de liaison montante à un sous-réseau d'un réseau de transport sur la base d'une correspondance entre les informations d'identité du paquet de données de liaison montante et le sous-réseau de réseau de transport, dans lequel
les informations d'identité du paquet de données de liaison montante comprennent des informations sur un identifiant d'une partie de plan d'utilisateur de protocole à effet tunnel GPRS associée au paquet de données de liaison montante.

2. Procédé de communication selon la revendication 1, dans lequel
il existe une correspondance entre les informations d'identité et un sous-réseau de réseau d'accès radio, ou les informations sur un identifiant du sous-réseau de réseau d'accès radio comprennent les informations d'identité ; et
il existe une correspondance entre le sous-réseau de réseau d'accès radio et le sous-réseau de réseau de transport, de sorte qu'il existe une correspondance entre les informations d'identité et le sous-réseau de réseau de transport.

3. Procédé de communication selon l'une quelconque des revendications 1 et 2, comprenant :
des informations sur la correspondance entre le sous-réseau de réseau d'accès radio et le sous-réseau de réseau de transport sont envoyées par un gestionnaire de réseau de transport à un gestionnaire de réseau d'accès radio, puis les informations concernant la correspondance entre le sous-réseau de réseau d'accès radio et le sous-réseau de réseau de transport sont envoyées par le gestionnaire de réseau d'accès radio au dispositif de réseau d'accès radio ; ou
des informations sur la correspondance entre le sous-réseau de réseau d'accès radio et le sous-réseau de réseau de transport sont envoyées par un gestionnaire de réseau au dispositif de réseau d'accès radio au moyen du gestionnaire de réseau d'accès radio.

4. Puce (1800) de système, la puce de système étant appliquée à un dispositif de réseau d'accès radio (1600), et
la puce de système comprenant :
au moins un processeur (1801), une mémoire (1802), un circuit d'interface (1803) et un bus (1804),
dans laquelle l'au moins un processeur, la mémoire et le circuit d'interface sont couplés au moyen du bus ; et
la puce de système interagit avec le dispositif de réseau d'accès radio au moyen du circuit d'interface ; et la mémoire mémorise des instructions qui, lorsqu'elles sont exécutées par l'au moins un processeur, amènent le dispositif de réseau d'accès radio à réaliser les opérations du dispositif de réseau d'accès radio dans le procédé selon l'une quelconque des revendications 1 à 3.

5. Dispositif de réseau d'accès radio (1600), le dispositif de réseau d'accès radio comprenant :
au moins un processeur (1603), une mémoire (1604), un premier appareil émetteur-récepteur (1601), un second appareil émetteur-récepteur (1602) et un bus (1605) de système,
dans lequel l'au moins un processeur, la mémoire, le premier appareil émetteur-récepteur et le second appareil émetteur-récepteur sont couplés au moyen du bus de système ;
le dispositif de réseau d'accès radio communique avec un dispositif côté réseau au moyen du premier appareil émetteur-récepteur, et le dispositif de réseau d'accès radio communique avec un dispositif terminal au moyen du second appareil émetteur-récepteur ;
et la mémoire mémorise des instructions qui, lorsqu'elles sont exécutées par l'au moins un processeur, amènent le dispositif de réseau d'accès radio à réaliser les opérations du dispositif de réseau d'accès radio dans le procédé selon l'une quelconque des revendications 1 à 3.

6. Procédé de communication, comprenant :
l'apprentissage (301), par un dispositif de réseau central, d'informations d'identité d'un paquet de données de liaison descendante ; et
**caractérisé par** : l'ajout (302), par le dispositif de réseau central, du paquet de données de liaison descendante à un sous-réseau d'un réseau de transport sur la base d'une correspondance entre les informations d'identité du paquet de données de liaison descendante et le sous-réseau de réseau de transport, dans lequel les informations d'identité du paquet de données de liaison descendante comprennent des informations sur un identifiant d'une partie de plan d'utilisateur de protocole à effet tunnel GPRS associée au paquet de données de liaison descendante.

7. Procédé de communication selon la revendication 6, dans lequel
il existe une correspondance entre les informations d'identité et un sous-réseau de réseau central, ou des informations sur un identifiant du sous-réseau de réseau central comprennent les informations d'identité ; et
il existe une correspondance entre l'identifiant du sous-réseau de réseau central et le sous-réseau de réseau de transport, de sorte qu'il existe une correspondance entre les informations d'identité et le sous-réseau de réseau de transport.

8. Procédé de communication selon l'une quelconque des revendications 6 et 7, comprenant :
des informations sur la correspondance entre le sous-réseau de réseau central et le sous-réseau de réseau de transport sont envoyées par un gestionnaire de réseau de transport à un gestionnaire de réseau central, puis les informations sur la correspondance entre le sous-réseau de réseau central et le sous-réseau de réseau de transport sont envoyées par le gestionnaire de réseau central au dispositif de réseau central ; ou
des informations sur la correspondance entre le sous-réseau de réseau central et le sous-réseau de réseau de transport sont envoyées par un gestionnaire de réseau au dispositif de réseau central au moyen d'un gestionnaire de réseau central.

9. Puce (2100) de système, la puce de système étant appliquée à un dispositif de réseau central (1900), et la puce de système comprenant :
au moins un processeur (2101), une mémoire (2102), un circuit d'interface (2103) et un bus (2104),
dans laquelle l'au moins un processeur, la mémoire et le circuit d'interface sont couplés au moyen du bus ; et
la puce de système interagit avec le dispositif de réseau central au moyen du circuit d'interface ; et la mémoire mémorise des instructions qui, lorsqu'elles sont exécutées par l'au moins un processeur, amènent le dispositif de réseau central à réaliser les opérations du dispositif de réseau central dans le procédé selon l'une quelconque des revendications 6 à 8.

10. Dispositif de réseau central (1900), le dispositif de réseau central comprenant :
au moins un processeur (1901), une mémoire (1902), un appareil émetteur-récepteur (1903) et un bus (1904) de système,
dans lequel l'au moins un processeur, la mémoire et l'appareil émetteur-récepteur sont couplés au moyen du bus de système ;
le dispositif de réseau central communique avec un dispositif côté réseau au moyen de l'appareil émetteur-récepteur ; et la mémoire mémorise des instructions qui, lorsqu'elles sont exécutées par l'au moins un processeur, amènent le dispositif de réseau central à réaliser les opérations du dispositif de réseau central dans le procédé selon l'une quelconque des revendications 6 à 8.

11. Système de communication, le système comprenant :
le dispositif de réseau d'accès radio selon la revendication 5 et/ou le dispositif de réseau central selon la revendication 10.

12. Support de stockage informatique, le support de stockage lisible par ordinateur mémorisant des instructions qui, lorsqu'elles sont exécutées par un processeur d'un dispositif de réseau d'accès radio, amènent le dispositif de réseau d'accès radio à exécuter le procédé selon l'une quelconque des revendications 1 à 3, ou lorsqu'elles sont exécutées par un processeur d'un dispositif de réseau central, amènent le dispositif de réseau central à exécuter le procédé selon l'une quelconque des revendications 6 à 8.

13. Produit-programme informatique, le produit-programme informatique comprenant des instructions qui, lorsqu'elles sont exécutées par un processeur d'un dispositif de réseau d'accès radio, amènent le dispositif de réseau d'accès radio à exécuter le procédé selon l'une quelconque des revendications 1 à 3, ou lorsqu'elles sont exécutées par un processeur d'un dispositif de réseau central, amènent le dispositif de réseau central à exécuter le procédé selon l'une quelconque des revendications 6 à 8.
